(19)

**Europäisches Patentamt**
**European Patent Office**
**Office européen des brevets**

(11) **EP 1 958 059 B1**

(12) **EUROPEAN PATENT SPECIFICATION**

(45) Date of publication and mention
of the grant of the patent:
**25.11.2009 Bulletin 2009/48**

(51) Int Cl.:
*G06F 9/38* (2006.01)    *G06F 9/32* (2006.01)
*G06F 9/45* (2006.01)

(21) Application number: **06829300.0**

(22) Date of filing: **05.12.2006**

(86) International application number:
**PCT/EP2006/011655**

(87) International publication number:
**WO 2007/065627 (14.06.2007 Gazette 2007/24)**

(54) **DISTRIBUTED LOOP CONTROLLER ARCHITECTURE FOR MULTI-THREADING IN UNI-THREADED PROCESSORS**

VERTEILTE SCHLEIFENSTEUERUNGSARCHITEKTUR FÜR MEHRFACH-THREADS IN EINFACH-THREAD-PROZESSOREN

ARCHITECTURE A CONTROLEURS DE BOUCLES REPARTIS POUR DU MULTIFLOT DANS DES PROCESSEURS MONOFLOTS

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.12.2005 GB 0524720**

(43) Date of publication of application:
**20.08.2008 Bulletin 2008/34**

(73) Proprietors:
• **IMEC**
**3001 Leuven (BE)**
• **KATHOLIEKE UNIVERSITEIT LEUVEN**
**3000 Leuven (BE)**

(72) Inventors:
• **JAYAPALA, Murali**
**3001 Leuven (BE)**
• **RAGHAVAN, Praveen**
**Tamil Nady 620006 (IN)**
• **CATTHOOR, Franky**
**B-9140 Temse (BE)**

(74) Representative: **Bird, Ariane et al**
**Bird Goën & Co.**
**Klein Dalenstraat 42A**
**3020 Winksele (BE)**

(56) References cited:

• **VANDER AN T ET AL: "Instruction buffering exploration for low energy VLIWs with instruction clusters" DESIGN AUTOMATION CONFERENCE, 2004. PROCEEDINGS OF THE ASP-DAC 2004. ASIA AND SOUTH PACIFIC YOKOHAMA, JAPAN JAN. 27-30, 2004, PISCATAWAY, NJ, USA,IEEE, 27 January 2004 (2004-01-27), pages 825-830, XP010726692 ISBN: 0-7803-8175-0**
• **LAMBRECHTS A ET AL: "Design Style Case Study for Embedded Multi Media Compute Nodes" REAL-TIME SYSTEMS SYMPOSIUM, 2004. PROCEEDINGS. 25TH IEEE INTERNATIONAL LISBON, PORTUGAL 05-08 DEC. 2004, PISCATAWAY, NJ, USA,IEEE, 5 December 2004 (2004-12-05), pages 104-113, XP010759528 ISBN: 0-7695-2247-5**
• **GIBERT E ET AL: "Flexible compiler-managed L0 buffers for clustered VLIW processors" MICROARCHITECTURE, 2003. MICRO-36. PROCEEDINGS. 36TH ANNUAL IEEE/ACM INTERNATIONAL SYMPOSIUM ON 3-5 DEC. 2003, PISCATAWAY, NJ, USA,IEEE, 3 December 2003 (2003-12-03), pages 315-325, XP010674684 ISBN: 0-7695-2043-X**
• **RAGHAVAN P. ET AL.: "Distributed Loop Controller Architecture for Multi-threading in Uni-threaded VLIW Processors" PROCEEDINGS OF THE CONFERENCE ON DESIGN, AUTOMATION AND TEST IN EUROPE, 6 March 2006 (2006-03-06), - 10 June 2006 (2006-06-10) pages 339-344, XP002423390**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Technical field of the invention

The present invention relates to a microcomputer architecture with reduced power consumption and performance enhancement, and to methods of designing and operating the same.

### Background of the invention

Modern embedded applications and mobile terminals need to support increasingly complex algorithms for wireless communication and multimedia. They need to combine the high computational complexity of these standards with an extreme energy efficiency to be able to provide a sustained operation over long periods of time with no or minimal recharging of the battery. In some cases, like sensor-networks and in-vivo biomedical implants, battery-less operation may be preferred, where power is obtained by scavenging energy sources. In order to achieve such low power constraints it is desired that the energy consumption is reduced in all parts of the system.

Therefore, the embedded systems designer has to look at the complete system and tackle the power problem in each part. Energy consumption is application dependent and therefore the designer needs to minimise the energy required to finish a certain task, while respecting the performance requirements. It is important to focus on energy, as energy is what is drawn from a battery. The (peak) power consumption is of secondary importance, but still has to be controlled, because it influences production costs, like packaging.

Most energy efficient techniques that are currently used, reduce the power consumption of ASIPs, but do not attack the core bottleneck of the power problem viz. the instruction memory hierarchy and the register file.

Instruction memory hierarchy has been proven to be one of the most power hungry parts of the system, see Andy Lambrechts, Praveen Raghavan, Anthony Leroy, Guillermo Talavera, Tom Van der Aa, Murali Jayapala, Francky Catthoor, Diederik Verkest, Geert Deconinck, Henk Coporaal, Frédéric Robert, and Jordi Carrabina, "Power breakdown analysis for a heterogeneous NoC platform running a video application", Proc of IEEE 16th International Conference on Application-specific Systems, Architectures and Processors (ASAP), pages 179-184, July 2005. The instruction memory energy bottleneck becomes more apparent after techniques like loop transformations, software controlled caches, data layout optimisations (see Rajeshwari Banakar, Stefan Steinke, Bo-Sik Lee, M. Balakrishnan, and Peter Marwedel, "Scratchpad memory: A design alternative for cache on-chip memory in embedded systems", Proc of CODES, May 2002, and M. Kandemir, I. Kadayif, A. Choudhary, J. Ramanujam, and I. Kolcu, "Compilerdirected scratch pad memory optimization for embedded multiprocessors.", IEEE Trans on VLSI, pages 281-287, March 2004), and distributed register files (see Scott Rixner, William J. Dally, Brucek Khailany, Peter R. Mattson, Ujval J. Kapasi, and John D. Owens; "Register organization for media processing", HPCA, pages 375-386, January 2000; and Viktor Lapinskii, Margarida F. Jacome, and Gustavo de Veciana, "Application-specific clustered VLIW datapaths: Early exploration on a parameterized design space", IEEE Transactions on Computer Aided Design of Integrated Circuits and Systems, 21 (8):889-903, August 2002) have been applied to lower the energy consumption of other components of the system.

Reduced energy consumption is thus one of the most important design goals for embedded application domains like wireless, multimedia and biomedical.

State of the art architecture enhancements to reduce the energy consumed in the instruction memory hierarchy for VLIW processors include

- using loop buffers, as in M. Jaypala, T. Vanderaa, et. al., "Clustered Loop Buffer Organization for Low Energy VLIW Embedded Processors", IEEE Transactions on VLSI, June 2004 ;
- NOP compression, as in Halambi, A. Shrivastava, et. al., "An efficient compiler technique for code size reduction using reduced bit-width ISAs", Proc of DAC, March 2002 ;
- SILO cache, as in 5 T. M. Conte, S. Barierjia, et. Al., "Instruction fetch mechanisms for VLIW architectures with compressed encodings.", Proc of 29th International Symposium on Microarchitecture (MICRO), December 1996 ;
- code-size reduction, as in Halambi, A. Shrivastava, et. al., "An efficient compiler technique for code size reduction using reduced bit-width ISAs", Proc of DAC, March 2002; etc.

In spite of these enhancements, the instruction memory organizations still have low energy efficiency, as described in M. Jaypala, T. Vanderaa, et. al., "Clustered Loop Buffer Organization for Low Energy VLIW Embedded Processors", IEEE Transactions on VLSI, June 2004. Hence there is a need for an improved solution. The well-known *L0 buffer* or *loop buffer* is an extra level of memory hierarchy that is used to store instructions corresponding to loops. It is a good candidate for a distributed solution as shown in the above Jaypala document. But current distributed loop buffers support only one thread of control. In every instruction cycle, a single loop controller generates an index, which selects/fetches operations from the loop buffers. The loop counter/controller may be implemented in different ways:

instruction based or using a separate hardware loop counter. By supporting only one thread of control different incompatible loops cannot be efficiently mapped to different distributed loop buffers.

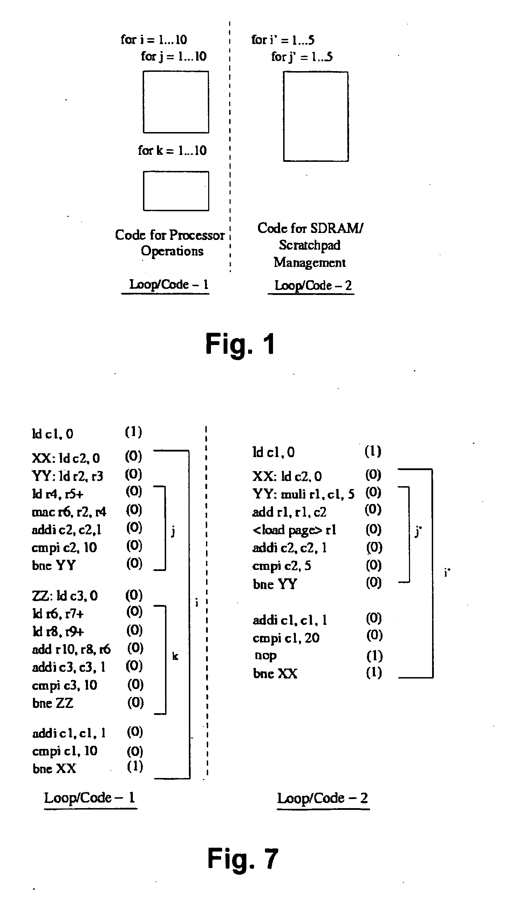

To improve both performance as well as energy efficiency, platforms and processors try to exploit more parallelism at different levels, as described by H. DeMan in "Ambient intelligence: Giga-scale dreams and nano-scale realities", Proc of ISSCC, Keynote Speech, February 2005. Since loops form the most important part of a program, on single-threaded architectures, techniques like loop fusion and other loop transformations are applied to exploit the parallelism available within loops (boosting ILP - Instruction Level Parallellism). However, not all loops can be efficiently broken down into parallel operations in this manner, as they may be incompatible (as illustrated in Fig. 1). This incompatibility of loops leads to a large control overhead. Therefore there is a need for a multi-threaded platform that can support execution of multiple loops and in this way exploit more parallelism, while adding minimal hardware/instruction overhead.

The example code shown in Figure 1 shows two loops with different loop organizations. In the context of embedded systems with software controlled memory hierarchy, the above code structure is realistic. Code 1 gives the loop structure for the code that would be executed on the data path of the processor. Code 2 gives the loop structure for the code that is required for data management in the data memory hierarchy. This may represent the code that fetches data from the external SDRAM and places it on the scratch-pad memory, or to other memory transfer related code. Code 1 can be assumed to execute some operations on the data that was obtained by Code 2. The above code example can be mapped on different platforms. The advantages and disadvantages of mapping such a code on state of the art techniques/systems are described below.

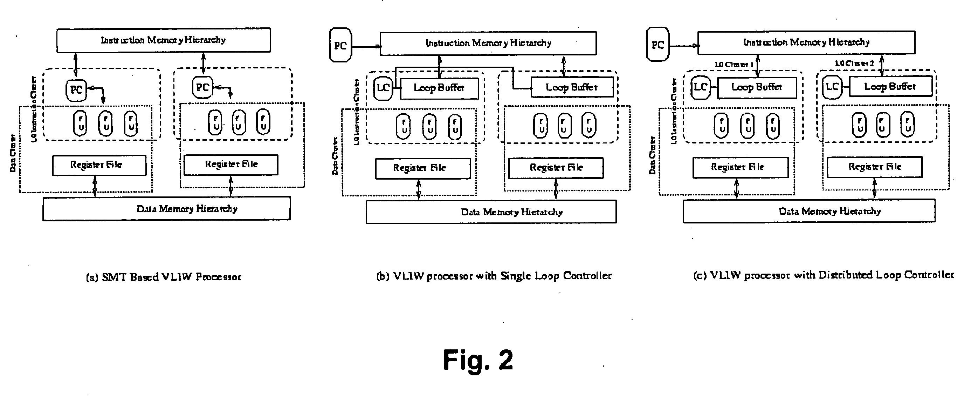

The L0 buffer or loop buffer architecture is a commonly used technique to reduce instruction memory hierarchy energy, as e.g. described by S. Cotterell and F. Vahid in "Synthesis of customized loop caches for core-based embedded systems.", Proc of International Conference on Computer Aided Design (ICCAD), November 2002, or by M. Jaypala, T. Vanderaa, et. al., in "Clustered Loop Buffer Organization for Low Energy VLIW Embedded Processors", IEEE Transactions on VLSI, June 2004. This technique proposes an extra level of instruction memory hierarchy which can be used to store loops. Thus, a small loop buffer is used in addition to the large instruction caches/memories, which is used to store only loops or parts of loops. Additionally, several compiler techniques are proposed to improve energy and performance of loop buffering, e.g. by J. W. Sias, H. C. Hunter, et. al., in "Enhancing loop buffering of media and telecommunications applications using low-overhead predication.", Proc of MICRO, December 2001, or by S. Steinke, L. Wehmeyer, et. al., in "Assigning program and data objects to scratchpad for energy reduction.", Proc of Design Automation and Test in Europe (DATE), March 2002. State of the art L0 organisations can be categorised based on three aspects: loop buffers, local controllers and thread of control. Loop buffers are memory elements used to store the instructions. Local controllers are the control logic used to index into the loop buffers. The thread of control, as the name suggests, gives the number of threads that can be controlled at a given time. Loop buffers and local controllers can be centralized or distributed. Most state of the art loop buffers and the associated local controllers are centralized, see e.g. S. Cotterell and F. Vahid, "Synthesis of customized loop caches for core-based embedded systems", Proc of International Conference on Computer Aided Design (ICCAD), November 2002. However for higher energy efficiency both the loop buffers and local controllers can be distributed. Murali Jayapala, Francisco Barat, Tom Vander Aa, Francky Catthoor, Henk Corporaal, and Geert Deconinck, in "Clustered loop buffer organization for low energy VLIW embedded processors", IEEE Transactions on Computers, 54(6):672-683, June 2005, explore and analyze the distributed aspects of loop buffers and controllers. Additionally, the thread of control can be single or multiple threaded. Currently, all the loop buffer organizations are intended for single thread of control (as illustrated in Figure 2(b)). Local controllers in this latest documents only regulate the accesses to the loop buffers. Some commercial processors, like Starcore DSP Techology, SC140 DSP Core Reference Manual, June 2000, implement the unified loop controller as a hardware counter, but enforce restrictions on handling branches during the loop mode. Other limitations include the need for affine loop bounds for the hardware loop.

State of the art L0 organizations like the ones shown in Figure 2(b) allow only single-threaded operation. Although the loop buffers are distributed, they contain a single loop controller and therefore such an organization does not support multi-threaded operation.

In uni-processor platforms, i.e. processors with single thread of control, (Figure 2(b)), loop fusion is a commonly used technique to execute multiple threads in parallel. By applying loop fusion, the candidate loops with different threads of control are merged into a single loop, with single thread of control. However, with this technique incompatible loops like the one shown in Figure 1 cannot be handled efficiently. When incompatible loops are merged, manu if-then-else constructs and other control statements are required for the checks on loop iterators. The number of these additional constructs needed can be very large, resulting in loss of both energy and performance. This overhead still remains, even if advanced loop morphing as in J. I. Gómez, P. Marchal, et. al., "Optimizing the memory bandwidth with loop morphing.", ASAP, pages 213-223, 2004 is applied.

Multi-threaded architectures and Simultaneous Multi-Threaded (SMT) processors, as described by E.Ozer, T. Conte, et. al., "Weld: A multithreading technique towards latency-tolerant VLIW processors.", International Conference on High Performance Computing, 2001; or by S. Kaxiras, G. Narlikar, et. al., "Comparing power consumption of an SMT and a CMP DSP for mobile phone workloads.", In Proc of CASES, pages 211-220, November 2001, or by D. M. Tullsen, S. J. Eggers, et. al., "Simultaneous multithreading: Maximizing on-chip parallelism.", Proc of ISCA, pages 392-403, June 1995, can also execute multiple loops in parallel. In such architectures, each thread has a set of exclusive resources to hold the state of the thread. Typically, each thread has its own register file and program counter logic, as shown in Fig. 2(a). Furthermore, in these architectures the data communication between the processes/threads is done at the cache level (or level-1 data memory). No specific constraints apply on the type of the threads that can be executed: any generic thread (loop and non-loop) can be executed.

However, these architectures are intended for larger granularity tasks than loops. Hence, the overhead of context management and switching is large. The data sharing in these architectures between two processes/threads is done at the cache level, which requires extra reads and writes from/to the memory and register file. SMT processors (shown in Figure 2(a)) need multiple fetch/decode units and complete program counter logic for each of the threads, which requires extra hardware overhead.

VANDER AN T ET AL: "Instruction buffering exploration for low energy VLIWs with instruction clusters" DESIGN AUTOMATION CONFERENCE, 2004. PROCEEDINGS OF THE ASP-DAC 2004. ASIA AND SOUTH PACIFIC YOKOHAMA, JAPAN JAN. 27-30, 2004, PISCATAWAY, NJ, USA,IEEE, 27 January 2004 (2004-01-27), pages 825-830, XP010726692 ISBN: 0-7803-8175-0 discloses a signal processing device adapted for processing of at least two loops (see Figure 2a)), said device comprising a plurality of functional units (FU) grouped into at least a first and a second processing units (instruction clusters), said first and second processing units being connected to a first and a second instruction memory (loop buffer partition), respectively, and to a first and a second memory controller (local controller LC), respectively, for fetching loop instructions from the corresponding instruction memory.

## Summary of the invention

It is an object of the present invention to provide a good microcomputer architecture as well as methods of operating the same. An advantage of the present invention is reduced power consumption.

The above objective is accomplished by a method and device according to the present invention.

The present invention proposes a virtually multi-threaded distributed instruction memory hierarchy that can support the execution of multiple incompatible loops in parallel. In addition to regular loops, irregular loops with conditional constructs and nested loops can be mapped. To make the loops fit in the loop buffers, sub-routines and function calls within the loops may be selectively in-lined or optimized using other loop transformations, like code hoisting or loop splitting. Alternatively, sub-routines can be executed from the conventional level-1 instruction cache/scratch-pad if they do not fit in the loop buffers. In an architecture in accordance with embodiments of the present invention, the loop buffers are clustered, each loop buffer having its own local controller, and each local controller is responsible for indexing and regulating accesses to its loop buffer. The novel and inventive contributions in the present invention may be one or more of the following:

- A distributed local controller based loop buffer organization is provided that can efficiently support two modes - single threaded and multi-threaded.
- In addition to executing loop nests sequentially and executing multiple compatible loops in parallel, the distributed controllers enable to execute multiple incompatible loops in parallel.
- The distributed controller based instruction memory hierarchy is energy efficient and scalable. Additionally, this enhancement improves the performance.

The present invention proposes support for the execution of multiple threads, in particular for the execution of multiple loops in parallel. In order to support multiple loop execution, the local controllers have additional functionality as detailed below. Local controllers in accordance with embodiments of the present invention provide indices to the loop buffers and may synchronize with other local controllers, in addition to regulating the access to the loop buffers.

It is an advantage of embodiments of the present invention that branches can be present inside the loop mode, either as a branch inside the loop buffer or as a branch outside the loop buffer contents.

Compared to prior art architectures, the multi-threaded architecture in accordance with embodiments of the present invention has one or more of the following differentiators. Firstly, the hardware overhead/ duplication is minimal. A simplified local controller may provided for each thread. Secondly, the data communication between the threads, in addition to cache level (or level-1 data memory) can also be done at the register file level. Thirdly, the architecture in accordance with embodiments of the present invention may be intended specifically for executing multiple loops. This implies that any generic threads may not be executed in the architecture according to embodiments of the present invention unless the generic threads are pre-transformed into loops. Since the hardware overhead is minimal, the architecture according to embodiments of the present invention is energy efficient. The data and control dependencies between two threads can be analyzed through design/compile time analysis of the loops. Such an analysis is not performed in the prior art Multi-threaded or SMT processors. This analysis improves the performance and energy efficiency, as it may enable to perform efficient data communication between the threads through the register file level. It may also enable to insert synchronization points between the loops. In prior art Multi-threaded or SMT processors, such analysis is not performed. The primary motivation for SMT processors is to improve resource utilization and hence performance, i.e., to fill in the empty instruction cycles of functional units (FUs) from different threads, thus improving performance. Hence, all the threads share all the FUs in the datapath. In the architecture according to embodiments of the present invention, the primary motivation is to improve resource utilization and by doing this reduce *energy* consumption. As motivated above, each thread has an exclusive set of FUs (FUs in one cluster or groupe) to minimize interconnect energy and the loops are pre-processed such that computations in each thread use only their exclusive set of FUs. In the architecture enhancement in accordance with embodiments of the present invention (see Figure 2(c)), multiple loops can be executed in parallel, without the overhead/limitations mentioned above.

Multiple synchronizable Loop Controllers (LCs) enable the execution of multiple loops in parallel as each loop has its own loop controller. This also enables a reduction in the interconnect required between the instruction memory and the datapath. The LC logic is simplified and the hardware overhead is minimal, as it has to execute only loop code. Data sharing and synchronization may be done at the register file level and therefore context switching and management costs are eliminated. A hardware based loop counter is also provided, which is capable of having breaks out of the loop (instruction affects the PC) and conditional/unconditional jumps inside as well (instruction affects the LC and counters). It is also possible to have non-affine loop counts (where the loop bounds are given by variables in registers instead of affine ones at compile-time).

In one aspect, the present invention provides a signal processing device adapted for simultaneous processing of at least two process threads, the process threads in particular being loops, each process thread or loop having instructions in particular loop instructions. The instructions are data access operations, which in case of loops are data access operations to be carried out a number of times in a number of loop iterations. The signal processing device comprises a plurality of functional units capable of executing word- or subword-level operations, to be distinguished from bit-level operations, on data, and grouped into a plurality of processing units or clusters. Each of the processing units are connected to a different instruction memory, also called loop buffer, for receiving loop instructions of one of the loops and to a different memory controller, also called loop controller, for accessing the instruction memory in order to fetch loop instructions from the corresponding instruction memory. The memory controllers of the signal processing device in accordance with the present invention are adapted for selecting operation synchronised or unsynchronised with respect to each other, said selection being performed via said loop instructions.

According to embodiments of the present invention, the memory controllers may each at least include a slave loop counter. The signal processing device may have a master counter or clock for providing a timing signal and said slave loop counters may be connected to the master counter for receiving the timing signal. When two memory controllers are selecting operation synchronised with respect to each other, the slave loop counters of at least two memory controllers are synchronously incremented upon reception of the timing signal. The timing signal may comprise a sequence of time points, and the selection may be performed via said loop instructions at every time point.

According to embodiments of the present invention, the master counter may be a system clock generator for providing a clock signal with clock cycles. The selection may then be performed at every clock cycle.

According to embodiments of the present invention, the slave loop counter may be a hardware loop counter or a software loop counter.

According to embodiments of the present invention, at least two functional units may be connected to a shared data memory, which may be a register.

According to embodiments of the present invention, a memory controller may be a program counter adapted for verifying loop boundary addresses, i.e. start and stop address of the loop instructions in the instruction memory.

According to embodiments of the present invention, a memory controller may be adapted for indexing its related instruction memory, also called loop buffer, and may be capable of synchronising with another memory controller. Such capability of synchronising with another memory controller may be obtained via loop instruction code, e.g. via selection information inserted into the loop instruction code. The selection information may consist of one or more bits.

According to embodiments of the present invention, the memory controllers may include two registers.

In another aspect, the present invention provides a method for converting application code into execution code suitable for execution on an architecture as defined hereinabove. The architecture comprises a plurality of functional units capable of executing word- or subword- level operations, to be distinguished from bit-level operations, on data, the functional units being grouped into a plurality of processing units or clusters. Each of the processing units are connected to a different instruction memory, also called loop buffer, for receiving loop instructions of one of the loops and to a different memory controller, also called loop controller, for accessing the instruction memory in order to fetch loop instructions from the corresponding instruction memory. The memory controllers of the architecture are adapted for selecting operation synchronised or unsynchronised with respect to each other, said selection being performed via said loop instructions. The method comprises obtaining application code, the application code comprising at least two, a first and a second, process threads, in particular loops, each of said process threads including instructions, the instructions in particular for loops being loop instructions. The instructions are data access operations, and in case of loops these data access operations are to be carried out in a number of loop iteration. The method in accordance with this aspect of the present invention furthermore also comprises converting at least part of said application code for the at least two process threads, in particular the first and the second loops. The converting includes insertion of selection information into each of the instructions, in particular into the loop instructions, the selection information being for fetching a next instruction, in particular a next loop instruction, of a first process thread, in particular of a first loop, synchronised or unsynchronised with the fetching of a next instruction, in particular a next loop instruction, of a second process thread, in particular a second loop. Said converting application code in accordance with this aspect of the present invention is particularly good for converting code comprising at least two loops each having a nesting structure, the at least two loops being non-overlapping in their nesting structure, i.e. the at least two loops being incompatible loops.

According to embodiments of the present invention, said converting may be adapted so that, when executing said at least two process threads, e.g. loops, simultaneously, each process thread, e.g. loop, executing on one of the processing units, selecting of the fetching of next instructions, e.g. loop instructions, is performed at time points of a time signal. Said converting may furthermore comprise providing the time signal having time points. This means that a counter may be implemented.

According to embodiments of the present invention, the converting of at least part of the application code may be based on a time/data dependency analysis.

According to embodiments of the present invention, at least part of the data communication between said process threads, e.g. loops, is performed solely via a shared data memory to which at least two functional units are connected to a shared data memory. The shared data memory may be a register.

According to embodiments of the present invention, said converting may include inserting synchronisation or alignment points between said at least two process threads, e.g. loops. Said insertion may require at most a number of bits equal to the number of processing units minus one.

According to embodiments of the present invention, said data dependency analysis may be based on a polyhedral representation of said at least two process threads, e.g. loops.

According to embodiments of the present invention, the application code may be pre-processed to fit into a polyhedral representation before said step of converting.

According to embodiments of the present invention, the application code may be pre-processed such that for at least two process threads, e.g. loops, their instructions fit within one of said instruction memories.

In a further aspect of the present invention, a method for executing an application on a signal processing device as defined hereinabove. The signal processing device comprises a plurality of functional units capable of executing word- or subword- level operations, to be distinguished from bit-level operations, on data, the functional units being grouped into a plurality of processing units or clusters. Each of the processing units are connected to a different instruction memory, also called loop buffer, for receiving loop instructions of one of the loops and to a different memory controller, also called loop controller, for accessing the instruction memory in order to fetch loop instructions from the corresponding instruction memory. The memory controllers of the signal processing device are adapted for selecting operation synchronised or unsynchronised with respect to each other, said selection being performed via said loop instructions. The method comprises executing the application on the signal processing device as a single process thread under control of a primary memory controller, and dynamically switching the signal processing device into a device with at least two non-overlapping processing units or clusters, and splitting a portion of the application in at least two process threads, e.g. loops, each process thread being executed simultaneously as a separate process thread on one of the processing units, each processing unit being controlled by a separate memory controller.

According to embodiments of the present invention, the method may comprise, for at least part of the application, synchronisation between said at least two process threads, e.g. loops. This way, the process threads, e.g. loops, are in lock-step. The process thread execution, e.g. loop execution, is adapted in accordance with synchronisation points between said at least two process threads, e.g. loops.

In yet another aspect, the present invention provides a microcomputer architecture comprising a microprocessor unit and a first memory unit, the microprocessor unit comprising a functional unit and at least one data register, the functional unit and the at least one data register being linked to a data bus internal to the microprocessor unit. The data register is a wide register comprising a plurality of second memory units which are capable to each contain one word. The wide register is adapted so that the second memory units are simultaneously accessible by the first memory unit, and at least part of the second memory units are separately accessible by the functional unit. In accordance with embodiments of the present invention, there is an alignment in the layout between the memory unit and the at least one data register.

In accordance with embodiments of the present invention, the memory unit may have a plurality of sense amplifiers and the at least one data register may have a plurality of flip flops, in which case there may be an alignment between each of the sense amplifiers and a corresponding flip flop.

The proposed aligned microcomputer architecture may be adapted such that it can exploit the concept of selective synchronisation of memory controllers.

In still another aspect, the present invention provides a method for designing on a computer environment a digital system comprising a plurality of resources. The method comprises inputting a representation of the functionality of the digital system, e.g. an RTL description thereof, the functionality being distributed over at least two of the resources interconnected by a resource interconnection, and performing automatedly determining an aspect ratio of at least one of the resources based on access activity of said resources while optimizing a cost criterion at least including resource interconnection power consumption cost.

According to embodiments of the present invention, the method may furthermore comprise, for at least one of the resources, placement of communication pins based on access activity of said resources while optimizing a cost criterion at least including resource interconnection power consumption cost. This pin placement may be performed at the same time as the determining of the aspect ratio of the resource. Alternatively, it may be performed after having determined the aspect ratio of the resource. According to still an alternative embodiment, pin placement of a resource may be performed before determination of the aspect ratio thereof.

According to embodiments of the present invention, the method may furthermore comprise, for at least two resources together, placement of communication pins based on access activity of said resources while optimizing a cost criterion at least including resource interconnection power consumption cost. The placement of the communication pins of the at least two resources may include alignment of the communication pins of a first of the two resources with the communication pins of a second of the two resources.

It is an advantage of the embodiments of the present invention that devices and methods with reduced power consumption are obtained.

The proposed layout methods are especially advantageous for the aligned microcomputer architecture, the microcomputer architecture exploiting the concept of selective synchronisation of memory controllers and/or a combination of these.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig. 1 illustrates a simple example of incompatible loop organisations.

Fig. 2 illustrates different processor architectures supporting multi-threading. Part (a) of Fig. 2 is a schematic block diagram of part of a simultaneous multi-threaded (SMT) processor, part (b) of Fig. 2 is a schematic block diagram of part of a uni-processor platform with single loop controller, and part (c) of Fig. 2 is a schematic block diagram of part of a uni-processor platform with distributed loop controller in accordance with embodiments of the present invention.

Fig. 3 illustrates an L0 controller for use with embodiments in accordance with the present invention.

Fig. 4 illustrates an L0 controller based on hardware loops, for use with embodiments in accordance with the present invention.

Fig. 5 shows an example of assembly code for a hardware loop counter based solution.

Fig. 6 illustrates a state diagram illustrating the switching between single and multi-threaded mode of operation.

Fig. 7 illustrates assembly code for the code shown in Fig. 1, with extra synchronisation bits being shown in brackets.

Fig. 8 illustrates an experimental set-up used for simulation and energy/performance estimation.

Fig. 9 illustrates instruction memory energy savings normalised to sequential execution

Fig. 10 illustrates performance comparison normalised to sequential execution.

Fig. 11 illustrates energy breakdown of different architectures.

Fig. 12 illustrates the evolution of interconnect energy consumption with technology scaling.

Fig. 13 illustrates an example of an architecture as described in EP-05447054.7, for which the layout optimisation of embodiments of the present invention can be used.

Fig. 14 illustrates a technique to optimize aspect ratio and pin placement of different modules in a design in accordance with embodiments of the present invention.

Fig. 15 illustrates a design flow for the experimentation and implementation flow according to embodiments of the present invention

Fig. 16 shows the layout after place and route for a Flat Design of an example structure.

Fig. 17 shows a layout for a Modular Design with default shape and default pin placement (DS_DP).

Fig.18 shows a layout which is shaped in accordance with embodiments of the present invention and has default pin placement (S_DP).

Fig. 19 shows a layout which has default shape but has undergone pin placement in accordance with the present invention (DS_PP).

Fig. 20 shows a layout which is shaped in accordance with embodiments of the present invention and has undergone pin placement in accordance with embodiments of the present invention (S_PP).

Fig. 21 shows a zoomed in layout as in Fig. 20 (S_PP).

Fig. 22 illustrates design capacitance of the different designs of Figs. 16 to 20.

## Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

Most embedded code is loop code. Instead of accessing the large L1 instruction memory for every instruction, the loop code can be buffered inside a smaller local memory called a loop buffer. Another property of embedded systems is that the amount of coarse grained parallelism across applications is low as the number of threads running in parallel is low. Therefore the parallelism has to be exploited at the sub-task level, across different loops of the same application (which may have dependencies). For executing these loops, usually software instructions are used which decrement a register, compare and branch on a condition. Since looping is very common for embedded systems, it is beneficial to convert this branch instructions into a hardware based loop counter, which is the case in nearly all state of the art DSPs (zero overhead looping). But these DSPs cannot run multiple loops in parallel (do not support SMT - simultaneous multi-threading).

Different loops across a same application can have very different loop characteristics (e.g memory operation dominated vs. computation dominated or different loop boundaries, loop iterator strides etc.). The example code shown in Figure 1 shows two loops with different loop organizations. Code 1 gives a loop structure for the computational code that would be executed on the data path of the processor. Code 2 gives the loop structure for the corresponding code that is required for data and address management in the data memory hierarchy that would be executed on the address management/generation unit of the processor. This may represent the code that fetches data from the external SDRAM and places it on the scratch-pad memory (or other memory transfer related operations). Code 1 in this example executes some operations on the data that was fetched by Code 2. In the context of embedded systems with software controlled data memory hierarchy, the above code structure is realistic. The above code example can be mapped on different platforms. These two codes could also represent two parts/clusters of a VLIW executing two blocks of an algorithm, where each cluster could be customized for executing that particular block. Hence need is present for a distributed control of two or more separate sets of codes.

It has been shown by W. Dally, in "Low power architectures", IEEE International Solid State Circuits Conference, Panel Talk on "When Processors Hit the Power Wall", February 2005, that local interconnect is one of the growing problems for energy-aware design. It is therefore desired that the most frequently accessed instruction components for different clusters of the VLIW are located closer to their execution units. A distributed L0 buffer configuration for each VLIW cluster with separate loop controllers as shown in Figure 2(c) can significantly reduce the energy consumed in the most active local wiring.

From the above discussions, it can be summarized that the instruction memory for a low power embedded processor preferably satisfies one or more of the following characteristics to be low power:

- Smaller memories (loop buffer) instead of large instruction memory.

- Distributed and localized instruction memories to reduce long interconnect and minimized interconnect switching on very active connections.

- Specialized local controllers with minimal hardware overhead.

- Distributed local controllers that can support execution of different loop organizations in parallel (single loops, multiple compatible loops and multiple incompatible loops).

In one aspect, the present invention provides a multi-threaded distributed instruction memory hierarchy that can support execution of multiple incompatible loops (as illustrated in Figure 1) in parallel. In addition to regular loops, irregular loops with conditional constructs and nested loops can also be mapped. Sub-routines and function calls within the loops must be selectively inlined or optimized using other loop transformations like code hoisting or loop splitting, to fit in the loop buffers. Alternatively, sub-routines could be executed from level-1 cache if they do not fit in the loop buffers.

A generic schematic of an architecture in accordance with embodiments of the present invention is shown in Figure 2(c). The architecture has a multicluster datapath comprising an array of data clusters. Each data cluster comprises at least one functional unit and a register file. The register files are thus distributed over the multicluster data path. The architecture also has a multicluster instruction path comprising an array of instruction clusters, there being a one-to-one relationship between the data clusters and the instruction clusters. Each instruction cluster comprises at least one functional unit (the at least one functional unit of the corresponding data cluster) and a loop buffer of the instruction memory hierarchy. This way, a loop buffer is assigned to each instruction cluster, and thus to the corresponding data cluster. The instruction memory hierarchy thus comprises clustered loop buffers, and in accordance with embodiments of the present invention, each loop buffer has its own local controller, and each local controller is responsible for indexing and regulating accesses to its loop buffer. The novelties of the architecture enhancement in accordance with embodiments of the present invention are one or more of the following:

- an energy-efficient and scalable, distributed controller organization
- multi-threaded incompatible loop operation in uni-threaded processors is enabled, and
- overall energy savings are obtained along with enhancement in performance.

In the architecture in accordance with embodiments of the present invention (Figure 2(c), and detailed below), multiple loops can be executed in parallel, without the overhead/limitations mentioned above. Multiple synchronizable Loop Controllers (LCs) enable the execution of multiple loops in parallel as each loop has its own loop controller. However, the LC logic is simplified and the hardware overhead is minimal as it has to execute only loop code. Data sharing and synchronization is done at the register file level and therefore context switching and management costs are eliminated.

It is an advantage of embodiments of the present invention to have non-shared distributed resources. It is often the case in embedded systems that the same processor needs to run different processes with different characteristics. Recently there has been a strong academic as well as industrial trend towards application-specific units to reduce the energy consumed for performing a specific task. Each distributed instruction cluster can be considered as an application specific cluster. A distributed instruction cluster processor with its own loop buffer and minimized resource sharing, as in A. El-Moursy, R. Garg, D. Albonesi, and S. Dwarkadas, "Partitioning multi-threaded processors with a large number of threads.", International Symposium on Performance Analysis of Systems and Software, March 2005, considerably reduces the extra energy cost due to the routing and interconnect requirement as it can be placed physically closer to its cluster.

It has been shown in W. Dally, "Low power architectures.", IEEE International Solid State Circuits Conference, Panel Talk on "When Processors Hit the Power Wall", February 2005 that local interconnect is one of the growing problems for energy-aware design. It is therefore an advantage if the instruction memories for different clusters of the proecessor are closer to their execution units. A distributed L0 loop buffer configuration for each cluster with separate loop controllers as shown in Figure 2(c), can significantly reduce the energy consumed in the local wiring.

Hereinafter, details are presented of embodiments of the architecture in accordance with embodiments of the present invention, which embodiments save energy consumption and improve performance by enabling a synchronized multi-threaded operation in a uni-processor platform, i.e. in processors with single thread of control.

**Extending a Uni-processor to Support Execution of Multiple Threads**

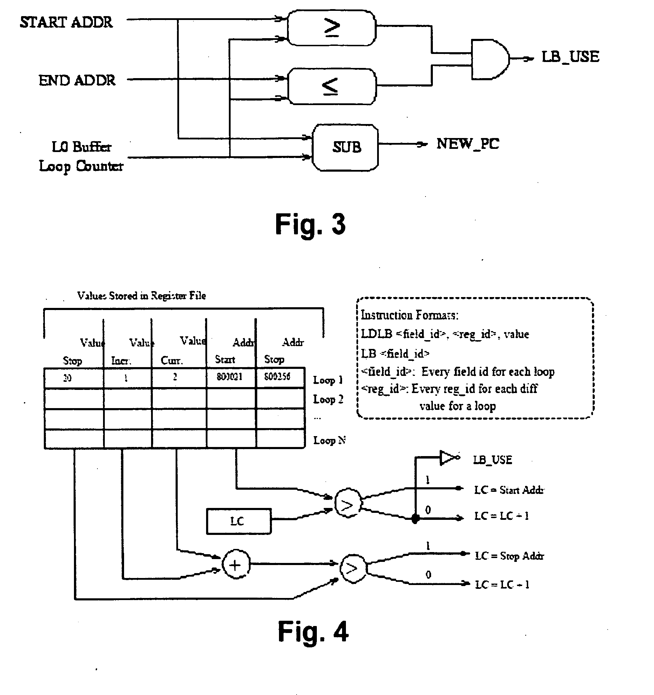

It is proposed to extend a uni-processor model to support two modes of loop buffer operation: Single-threaded and Multi-threaded. The extension to multi-threaded mode is done with special concern to support L0 buffer operation. A VLIW instruction is divided into bundles, where each bundle corresponds to an L0 cluster. Two basic architectures are described for the loop counter: a software counter based loop controller (shown in Fig. 3) and a hardware loop counter based architecture (shown in Fig. 4).

**Software counter based loop controller**

An L0 controller (illustrated in Figure 3) along with a counter (e.g. 5 bits) is responsible for indexing and regulating accesses to the L0 buffer. Unlike conventional Program Counters (PCs), the controller logic is much smaller and consumes lower energy, with the loss in flexibility that only loops can be executed from the loop buffers. In other words, the PC can address complete address space of the instruction memory hierarchy, the L0 controller in accordance with embodiments of the present invention can access only the address space of the loop buffer. The *LB_USE* signal indicates execution of an instruction inside the L0 buffer. The MEW_PC signal is used to index into the L0 buffer.

The loop buffer operation is initiated on encountering the LBON instruction, as mentioned in Murali Jayapala, Francisco Barat, Tom Vander Aa, Francky Catthoor, Henk Corporaal, and Geert Deconinck, "Clustered loop buffer organization for low energy VLIW embedded processors", IEEE Transactions on Computers, 54(6):672-683, June 2005. It is possible to perform branches inside the loop buffer as there is a path from the loop controller to the branch unit similar that the one presented in the above Jayapala document. It can be noticed that in spite of using a 5-bit LC, there is still a need to have instructions which at the end or start of the loop perform, increment, compare and conditional branch on the loop iterator values (similar to a regular set of instructions used for performing the loop). This can be eliminated using a hardware based counter in accordance with another embodiment of the present invention. For further details on the loop controller operation the reader is referred to the above Jayapala document.

**Hardware counter based loop controller**

Figure 4 shows an illustration of a hardware loop based architecture. It is to be noted that this is still a fully programmable architecture. The standard register file contains the following: *start value, stop value, increment value of the iterator, start and stop address* for each of the different loops. The current iterator value is also stored in a separate register/counter LC as shown in Figure 4. Based on these values, every time the loop is executed, the corresponding checks are made and necessary logic is activated.

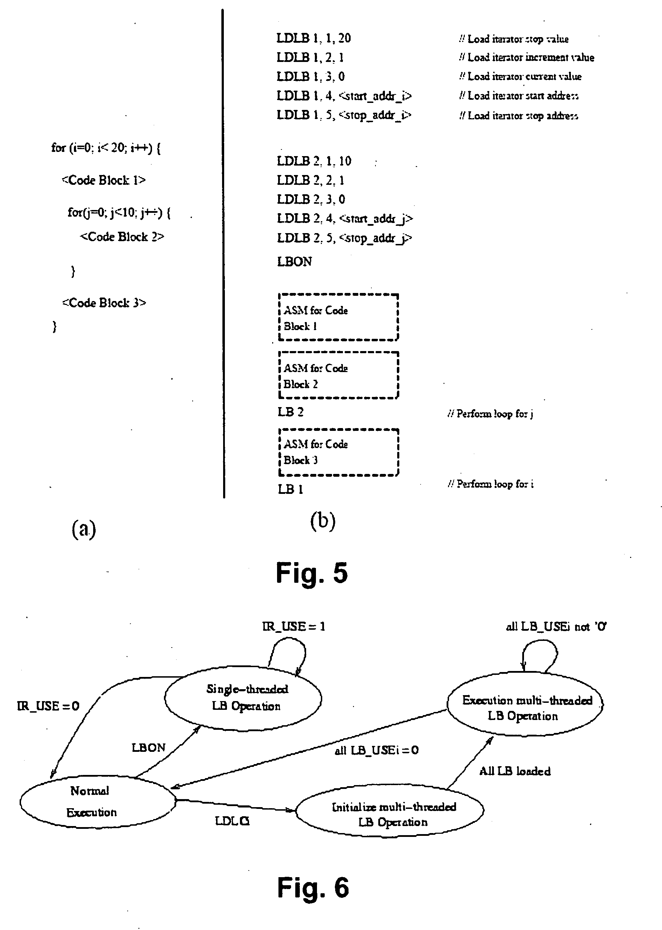

Figure 5 shows a sample C code and the corresponding assembly code which may be used for operating on this hardware based loop controller. The LDLB instructions are used to load the start, stop, increment values of the iterators, and start, stop address of the loop respectively in the register file. The format for the LDLB instruction is shown in Figure 4. It can be seen from Figure 5(b) that although a number of load operations (LDLB instructions) are needed to begin the loop mode (introducing an initial performance penalty), only one instruction (LB instruction) is needed while operating in the loop mode (LB 1 and LB 2). The loop buffer operation is started on encountering the LBON instruction, which demarcates the loop mode. The LB instructions activate the hardware shown in Figure 4, thereby performing the iterator increment/decrement, comparison operations for the loop and branching to the appropriate location if necessary. Hence the instruction memory cost (number of accesses to the loop buffer) for every loop is reduced, although the operations performed are the same.

At the beginning of the loop nest, the corresponding, start, stop, increment values of the loop iterator and the start and stop address of the corresponding loop must be initialized. These values reside in the register file. Although a separate register file for these values could be imagined for optimizing the power further, these values are best kept in the standard register file, as they may be used for other address computation inside the loop. Such a configuration also enables possible conditional branches within the loop buffer as well as to outside the loop buffer. The initialization values for each loop can be optionally from other registers. This allows the loop bounds to be non-affine. Non-affine implies that the initialization values are not known at compile time. It is possible to have both conditions inside the loop buffer mode as well as breaks outside the loop buffer code.

Similar to the software based loop counter the signal *LB USE* is generated for every loop indicating the loop buffer is in use. This signal is used later on for multi-threading.

Since a hardware counter is used instead of the regular datapath, the counter size can be customized to be of the size of the largest iterator value that may be used in the application, which usually is much lower than the 32-bit integers. Since the data for loop counters are stored in the register file itself, there is no restriction on the depth of the loop nest that can be handled, unlike other processors like StarCore, SC140 DSP Core Reference Manual, June 2000, and TI C64x+ series.

**Running multiple loops in parallel**

The L0 controllers can be seamlessly operated in single/multi-threaded mode. The multi-threaded mode of operation for both the software controlled loop buffer and hardware controlled loop buffer is similar as both of them produce the same signals (*LB USE*) and use LBON for starting the L0 operation. The state diagram of the L0 Buffer operation is shown in Figure 6. The single threaded loop buffer operation is initiated on encountering the *LBON <addr> <offset>* instruction. Here *<addr>* denotes the start address of the loop's first instruction and *<offset>* denotes the number of instructions to be fetched to the loop buffer starting from address *<addr>.* In the single threaded mode, the loop counter of each cluster may be incremented in lock-step every cycle. This mode of operation is similar to the L0 buffer operation presented in M. Jaypala, T. Vanderaa, et. al., "clustered Loop Buffer Organization for Low Energy VLIW Embedded Processors", IEEE Transactions on VLSI, June 2004, but in the approach in accordance with embodiments of the present invention an entire cluster can be made inactive for a given loop nest to save energy. In case of the hardware based loop buffer operation the LDLB and LB instructions are also needed for the single threaded operation as explained above.

In the multi-threaded mode, the loop counters are still incremented in lock-step under a same timing signal, e.g. a same clock, but not necessarily at every instruction. Instead they align or synchronize at loop boundaries or explicit alignment or synchronization points identified by the compiler (explained below). To spawn execution of multiple loops that have to be executed in parallel, each L0 cluster is provided with a separate instruction (*LDLCi <addr> <offset>*) to explicitly load different loops into the corresponding L0 clusters. Here i denotes the cluster number. For instance, in the following example two instructions LDLC1 <addr1> <offset1 > and LDLC2 <addr2> <offset2> are inserted in the code to indicate that the loop at addr1 is to be executed in cluster 1 and the loop at the addr2 is to be executed in cluster 2.

```
               ...
       LDLC1 <addr1> <offset1>
       LDLC2 <addr2> <offset2>
addr1: for (...){
       Loop Body }
addr2: for (...){
       Loop Body }
               ...
```

Once the instruction *LDLCi* is encountered, the processor operates in the multi-threading mode. During the initialization phase all the active loop buffers are loaded with the code that they will be running. For example, the *i*th loop buffer will be loaded with *offseti* number of instructions starting from address addri specified in instruction *LDLCi.* Meanwhile, each cluster's loop controller copies the needed instructions from the instruction memory into the corresponding loop buffer. If not all the clusters are used for executing multiple loops, then explicit instructions are inserted by the compiler to disable them. The LDLCi instructions are used the same way and instead of the LBON instruction for both the software and hardware controlled loop buffer architectures. For the above example, in case of the hardware based loop buffer architecture, the LDLB instructions for initializing the loop interations and address for the two loops would precede the LDLC instructions.

When a cluster has completed fetching a set of instructions from its corresponding address, the loop buffer enters the execution stage of the *Multi-threaded* execution operation. During the execution stage, each loop execution is independent of the others. This independent execution of the different clusters can be either through the software loop counter or the hardware based loop controller mechanism. Although the loop iterators are not in lock-step, the different loop buffers are aligned or synchronized at specific alignment or synchronization points (where dependencies were not met) that are identified by the compiler. Additionally, the compiler or the programmer must ensure the data consistency or the necessary data transfers across the data clusters.

The loops loaded onto the different L0 clusters can have loop boundaries, loop iterators, loop increments etc. which are different from each other. This enables operating different incompatible loops in parallel to each other.

**Software/Compiler Support**

The code generation for the architecture in accordance with embodiments of the present invention is similar to the code generated for a conventional VLIW processor, except for the parts of the code that need to be executed in multi-threaded mode. As mentioned above, additional instructions are inserted to initiate the multi-threaded mode of operation.

Figure 7 shows the assembly code for the two incompatible loops presented in Figure 1. Code 1 is loaded to L0 Cluster 1 and Code 2 is loaded to L0 Cluster 2. If, for two iterations of loop i, only one iteration of loop i' has to be executed, then there is a need to identify this dependency and need to insert necessary alignment or synchronization points to respect this dependency. The compiler needs to extract and analyze data dependencies between these two loops. For this purpose, the two loops shown in Figure 1 are first represented in a polyhedral model, as described in F. Quillere, S. Rajopadhye, and D. Wilde, "Generation of efficient nested loops from polyhedra", Intl. Journal on Parallel Programming, 2000. Once the different codes are represented in a common iteration domain, as described in the Quillere document, a data dependency analysis can be done, as described in J. I. Gómez, P. Marchal, et. al., "Optimizing the memory bandwidth with loop morphing", ASAP, pages 213-223, 2004. On analyzing the data dependencies between different codes, the alignment or synchronization points can be derived. The alignment or synchronization points are then annotated back on the original code shown in Figure 7 within brackets. In case the original code has pointers or if conditions are met which prevent from entering the polyhedral model, various pre-processing techniques may be used, like e.g. SSA, if-conversion, pointer removal as described in Martin Palkovic, Erik Brockmeyer, Peter Vanbroekhoven, Henk Corporaal, and Francky Catthoor, "Systematic pre-processing of data dependent constructs for embedded systems", Proceedings of PATMOS, pages 89-98, 2005.

Alignment or synchronization of iterators between the two clusters is achieved by adding extra information, e.g. an extra bit, to every instruction. An example of such extra bits is shown in Figure 7. A '0' means that the instruction can be executed independently of the other cluster and a '1' means that the instruction can only be executed if the other cluster issues a '1' as well. In the example shown in Figure 7, the only one extra bit is sufficient as there are only two instruction clusters. In case of more than two instruction clusters, one bit can be used for every other cluster that needs to be aligned or synchronised with. The handshaking/instruction level synchronization can, however, be implemented in multiple ways. For example, instruction Id $c1$, $0$ of both the clusters would be issued simultaneously. Worst-case the number of bits required for synchronization is one less than the number of clusters. A trade-off can be made between granularity of alignment or synchronisation versus the overhead due to alignment or synchronisation. If necessary extra nop instructions may be inserted to obtain correct synchronization. This instruction level synchronization reduces the number of accesses to the instruction memory and hence is energy-efficient.

It can be seen from the assembly code in Figure 7 that using the synchronization bits the data sharing can be done at the register level instead of the cache level like in the case of SMT processors. This reduces the number of reads and writes to the memory and register file and further saving energy.

**Experimental Platform Setup**

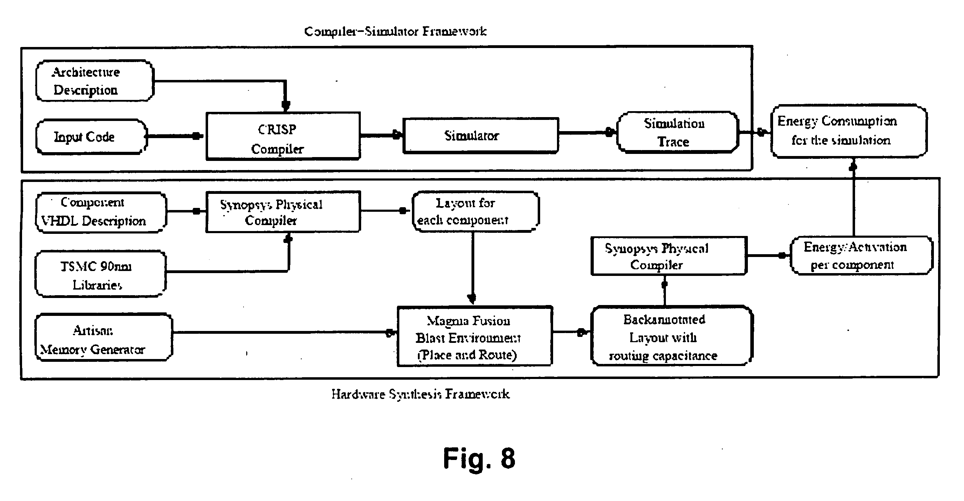

Experiments were performed on a CRISP simulator as described by P. OpDeBeeck, F. Barat, et. Al, in "CRISP: A template for reconfigurable instruction set processors", Proc of International conference on Field Programmable Logic (FPL), August 2001. The CRISP simulator is built on the Trimaran VLIW frame-work as described in *"Trimaran: An Infrastructure for Research in Instruction-Level Parallelism*.",. The simulator was annotated with power models for different parts of the system. The power models for the different parts of the processor where obtained using Synopsys *Physical Compiler* and *DesignWare components, TSMC90nm* technology, 1.0V Vdd. The power was computed after complete layout was performed and was back-annotated with activity reported by simulation using *ModelSim.* The complete system was clocked at 200MHz (which can be considered roughly to be the clock frequency of most embedded systems, nevertheless the results are also valid for other operating frequencies). The extra energy consumed due to the synchronization hardware was also estimated using *Physical Compiler* after layout, capacitance extraction and back-annotation. Memories from Artisan Memory Generator were used. These different blocks were then placed and routed, and the energy consumption of the interconnect between the different components was calculated based on the activation of the different components. The experimental setup and flow is shown in Figure 8. The interconnect requirement between the loop buffers, loop controller and the functional units is also taken into account while computing the energy estimates.

Special instructions as mentioned above were inserted to enable multi-threaded operation on the VLIW. The experiments were performed on a VLIW with four slots. All slots were considered to be homogeneous and form one data cluster i.e. all four slots share the same global register file. Two slots are grouped into one L0 instruction cluster. Hence the VLIW processor has one common data cluster and two L0 instruction clusters. Since most current embedded applications do not provide very high ILP, a VLIW of 4 slots was chosen. Although the multi-threading technique in accordance with embodiments of the present invention is applied on a 4 issue VLIW, the results scale to other sizes of VLIWs provided the application also provides the required ILP. In case more threads are used (greater than 2), a wider VLIW can be used.

## Benchmarks and Base Architectures used

The TI DSP benchmarks are used for benchmarking the multi-threading architecture in accordance with embodiments of the present invention, which is a representative set for the embedded systems domain. The output of the first benchmark is assumed to be the input to the second benchmark. This is done to create an artificial dependency between the two threads. Experiments are also performed on real kernels from a Software Defined Radio (SDR) design of a MIMO WLAN receiver (2-antenna OFDM based outputs). After profiling, the blocks that contribute most to the overall computational requirement were taken (viz. Channel Estimation kernels, Channel Compensation - It is to be noted that BPSK FFT was the highest consumer, but it is not used as it was fully optimized at the assembly level and mapped on a separate hardware accelerator). In these cases, dependencies exist across different blocks and they can be executed in two clusters.

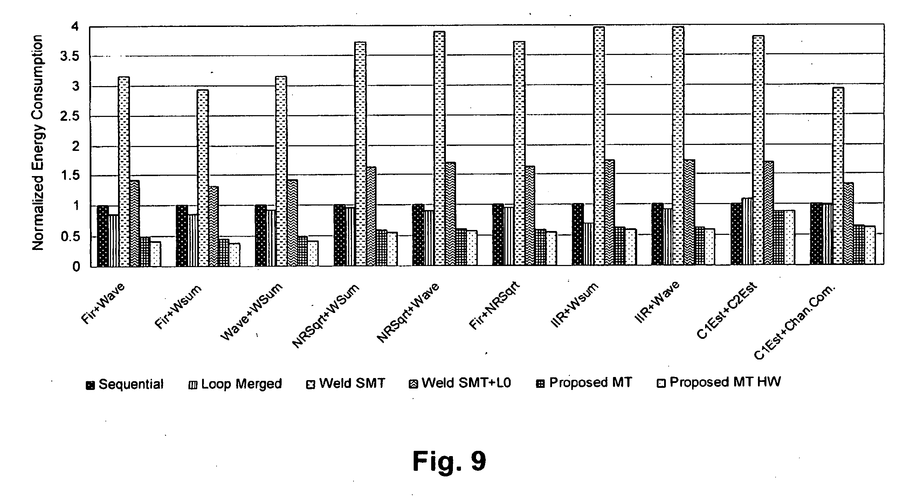

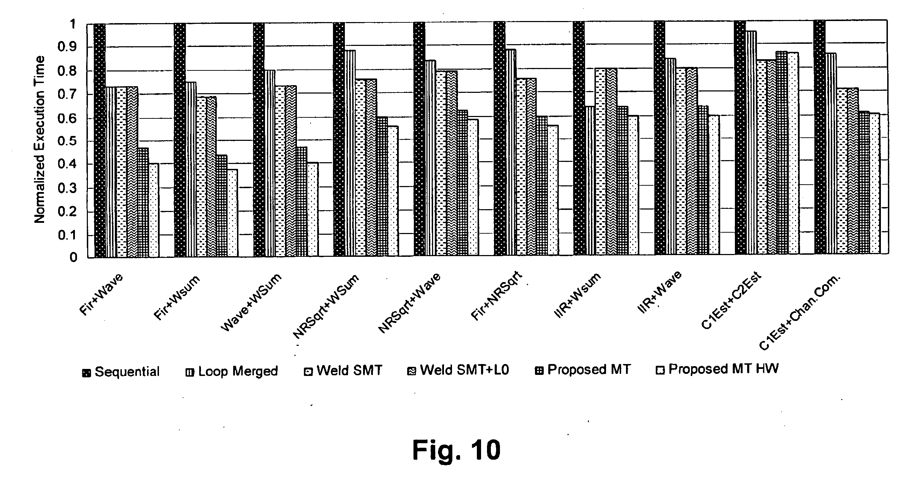

Figures 9 and 10, respectively, show the energy savings and performance gains that can be obtained when multiple kernels are run on different L0 instruction clusters of the VLIW processor with the multi-threading extension in accordance with embodiments of the present invention. The energy savings are considered for the instruction memories of the processor as they are one of the dominant part of any programmable platform SoC, see Andy Lambrechts, Praveen Raghavan, Anthony Leroy, Guillermo Talavera, Tom Van der Aa, Murali Jayapala, Francky Catthoor, Diederik Verkest, Geert Deconinck, Henk Coporaal, Frédéric Robert, and Jordi Carrabina, "Power breakdown analysis for a heterogeneous NoC platform running a video application", Proc of IEEE 16th International Conference on Application-specific Systems, Architectures and Processors (ASAP), pages 179-184, July 2005.

In the *Sequential* case (Baseline case), two different codes are executed on the VLIW one after the other. The VLIW has a centralized loop buffer organization. In the loop merged case, a variant of the loop fusion technique described in José Ignacio Gómez, Paul Marchal, Sven Verdoorlaege, Luis Piñuel, and Francky Catthoor, "Optimizing the memory bandwidth with loop morphing", ASAP, pages 213-223, 2004, is applied and executed on the VLIW with a centralized loop buffer organization and with a central loop controller. For the *Weld SMT* case, a complete program counter and instruction memory of 32KB are used. The SMT is performed as described in E. Ozer, T.M. Conte, and S. Sharma. "Weld: A multithreading technique towards latency-tolerant VLIW processors", International Conference on High Performance Computing, 2001. This SMT has also been enhanced with an energy efficient centralized loop buffer instead of the IL1 and PC based architecture. The overhead of the "Welder" is also taken into account. The "Welder" is a network constructed of muxes and a mux controller, to distribute operations for different threads over the functional unit. Although SMT and Loop buffer technique are orthogonal, for the comparison to be fair the loop buffering technique has also been applied to the SMT architecture (*Weld SMT+L0*).

The software based multi-threading in accordance with an embodiment of the present invention (*Proposed MT*) is based on the logic shown in Figure 3. The hardware loop counter based multi-threading according to another embodiment of the present invention (*Proposed MT HW*) is based on the logic shown in Figure 4. This architecture has a 5-bit loop counter logic for each cluster. All the results are normalized with respect to the sequential execution. Also aggressive compiler optimizations like software pipelining, loop unrolling etc. have been applied in all the different cases.

## Energy and Performance Analysis

The Loop-Merged(Morphed) technique saves both performance and energy over the *Sequential* technique (see Figure 10 and 9) since extra memory accesses are not required and data sharing is performed at the register file level. Therefore the Loop-Merged technique is more energy as well as performance efficient compared to the *Sequential* case. In case of the Loop-*Merged* case there exists an overhead due to iterator boundaries etc., which introduce extra control instructions.

The *Weld SMT* and *Weld SMT+L0* improve the performance further as both tasks are performed simultaneously. In some benchmarks used, the *Weld* SMT can help achieve an IPC which is close to 4. The overhead due to the "Welder" is quite large and hence in terms of energy the Weld based techniques perform worse than both the sequential and the loop merged case. Also since the "Welder" has to be activated at every issue cycle, its activity is also quite high. Additionally, an extra overhead is present for maintaining two PCs (in case of *Weld SMT*) or two LCs (in case of *Weld SMT+L0*) for running two threads in parallel. The data sharing is at the level of the DL1, therefore an added communication overhead exists. As a result, the Weld based techniques perform worse than the sequential and the loop merged techniques in terms of energy. Even if enhancements like sharing data at the register file level are introduced, the overhead due to the Weld logic and maintenance of two PCs is large for embedded systems.

In case of the *Proposed MT* and *Proposed MT HW* architectures in accordance with embodiments of the present invention, the tasks are performed simultaneously like in the case of Weld SMT, but the data sharing is at the register-level. This explains the energy and performance gains over the *Sequential* and *Loop Merged* cases. Since the overhead of the "Welder" is not present, the energy gains over the Weld SMT+L0 technique is large as well. Further gains are obtained due to the reduced logic requirement for the loop controllers and the distributed loop buffers. In conclusion, the technique in accordance with embodiments of the present invention has the advantages of both loop-merging as well as SMT and avoids the pit-falls of both these techniques.

The results show that the *Proposed MT* in accordance with an embodiment of the present invention has an energy saving of 40 % over sequential, 34 % over advanced loop merged and 59 % over the enchanced SMT (Weld SMT+L0) technique. On average the *Proposed MT* in accordance with an embodiment of the present invention has a performance gain of 40% over sequential, 27% over loop merged and 22% over Weld SMT techniques. In certain cases like *Chan1Est + Chan2Est* and *C1Est + ChanCompen,* the SMT based techniques outperform the multithreading in accordance with embodiments of the present invention as the amount of data sharing is very low compared to the size of the benchmark. In terms of energy consumption the multi-threading in accordance with embodiments of the present invention is always better than other techniques. It can be intuitively seen that in case the *Weld SMT+L0* architecture is further enhanced with data sharing at the register file level, the *Proposed MT* and *Proposed MT HW* in accordance with embodiments of the present invention would perform relatively worse in terms of performance. In terms of energy efficiency however, the *Proposed MT* and *Proposed MT HW* based architectures in accordance with embodiments of the present invention would still be much better. It has been theoriticaly observed (this implies removing the cycles that correspond to the shared data transfer through the memory) that even when the *Weld SMT+L0* architecture would support data sharing at the register file level, the performance gain of this architecture over the *Proposed MT* and *Proposed MT HW* in accordance with embodiments of the present invention is less than 5% in most cases.

The *Proposed MT HW* in accordance with an embodiment of the present invention is both more energy efficient as well as has better performance compared to the *Proposed MT* technique in accordance with another embodiment of the present invention. This is more apparent in smaller benchmarks as the number of instructions per loop iteration is small. The hardware based loop counter (*Proposed MT HW*) outperforms the software based technique, as the number of cycles required for performing the loop branches and iterator computation is reduced. This difference is larger in case of smaller benchmarks and smaller in case of larger benchmarks. Also in terms of energy efficiency the *Proposed MT HW* is more energy efficient compared to the *Proposed MT.* The overhead of loading the loop iterators and the values required form the *Proposed MT HW* architecture was about 2-3 cycles for every loop nest. This overhead depends on the depth of the loop nest. Since all the LDLB instructions are independent of each other, they can be executed in parallel. Since in almost all cases, the cycles required for the loop body multiplied by the loop iterations is quite large, the extra overhead of initialization of the hardware counter is small. The synchronization required between the distributed loop buffers in case of both the *Proposed MT* and *Proposed MT HW,* was of the order of 1-2 cycles per loop iteration for most benchmarks. The relative overhead of this synchronization depends on the number of cycles required for the loop body itself and the amount of data sharing present across the two loops running in parallel. For example, the loop body size of the benchmark *Chan1Est + Chan2Est* is about 163 cycles and 6 cycle of this were due to synchronization.

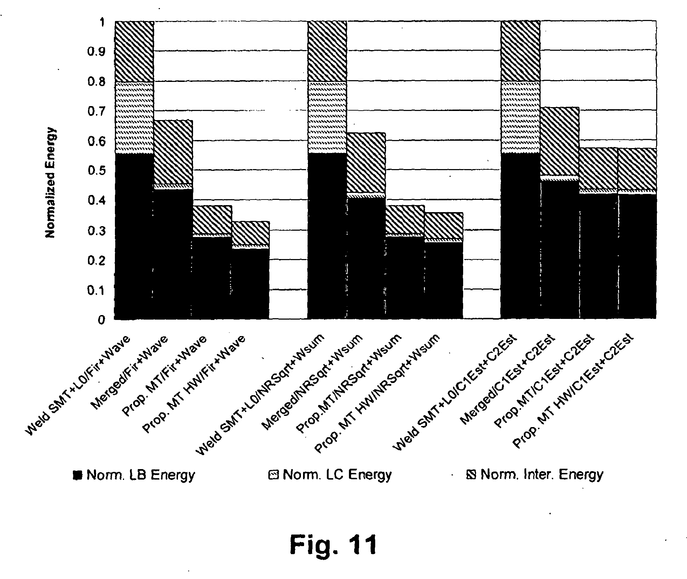

To further analyze the energy efficiency of these various architectures, the energy consumption in different parts of the instruction memory is split for three of the benchmarks and is shown in Figure 11. The energy consumption is split into three parts and is normalized to the *Weld SMT + L0* energy consumption:

    1. LB Energy: Energy consumption of the loop buffer which stores the loop instructions
    2. LC Energy: Energy consumption of the control logic required for accessing the instruction (Loop Controller, Weld logic, Hardware loop counter etc.)
    3. Interconnect Energy: Energy consumption of the interconnect between the loop buffer and the FUs

Figure 11 shows that the energy consumption of the LC logic considerably reduces as we move from the *Weld SMT+L0* based architecture to a standard *L0* based architecture with a single LC or the *Proposed MT* and *Proposed MT HW* based architectures in accordance with embodiments of the present invention. This is because the overhead of the Weld logic, extra cost of maintaining two loop controllers. The interconnect cost also reduces as we go from a centralized loop buffer based architecture to a distributed loop buffer based architecture by almost a factor of 20%. In case of smaller loops the energy efficiency of the *Proposed MT HW* is higher than that of the *Propsed MT.*

Embodiments of the present invention thus present an architecture which reduces the energy consumed in the instruction memory hierarchy and improves performance. The distributed instruction memory organization of embodiments of the present invention enables multi-threaded operation of loops in a uni-threaded processor platform. The hardware overhead required is shown to be minimal. An average energy saving of 59% was demonstrated in the instruction memory hierarchy over state of the art SMT techniques along with a performance gain of 22%. The architecture in accordance with embodiments of the present invention is shown to handle data dependencies across the multiple threads. The architectures in accordance with embodiments of the present invention have low interconnect overhead and hence are suitable for technology scaling.

**Layout optimization**

Layout optimization also helps in obtaining a low power processor architecture design. Therefore, embodiments of the present invention also involve a cross-abstraction optimization strategy that propagates the constraints from the layout till the instruction set and compiler of a processor. Details of an example of a processor for which the layout optimisation of embodiments of the present invention can be used can be found in EP-A-1 701 249.

Low power design is one of the most important drivers of most embedded system markets. As Vdd scaling across technologies has been slowing down, it has become extremely important to perform cross-abstraction optimization.

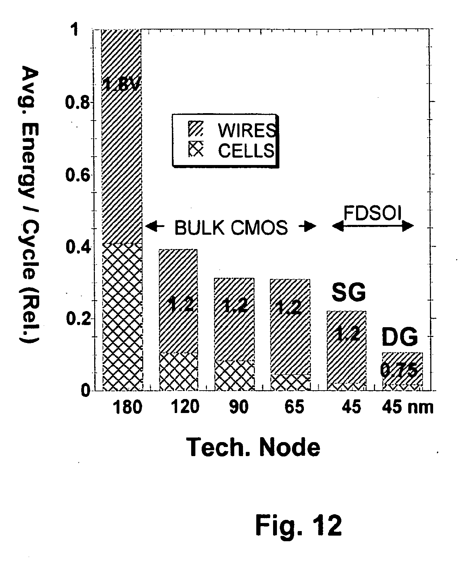

Figure 12 shows the energy split between the energy required to driving interconnect and transistors (logic) as technology scales. It shows 230K cells connected to for certain logic and the corresponding energy consumption as technology scales. It can be clearly inferred from Figure 12 that interconnect is the most dominant part of the energy consumption.

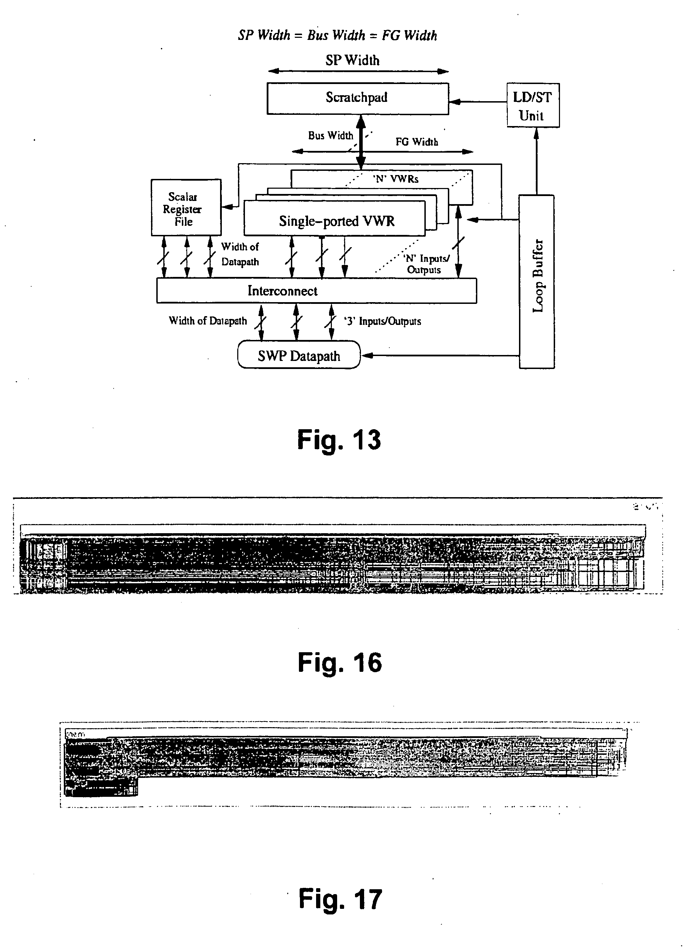

Figure 13 shows an example of an architecture as described in EP-A-1 701 249, incorporated herein by reference, and for which the layout optimisation of embodiments of the present invention can be used. A brief description of this architecture is presented below.

The architecture of EP-A-1 701 249 comprises a wide memory unit that is software controlled. A wide bus connects this memory to a set of very wide registers (VWR). Each VWR, contain a set of registers which can hold multiple words. Each register cell in the VWR is single ported and hence consumes low power. The width of the VWR is equal to that of the bus width and that of a line of the software controlled wide memory unit. The VWR has a second interface to the datapath (functional units). Since the register cells in the VWR are single ported, the VWRs are connected to the datapath using a muxing/demuxing structure.

Since the VWR are as wide as the memory and the buses between the memory unit and the VWR are also as wide, a large optimization can be performed to reduce the energy consumption of the interconnect (by reducing its capacitance).

**Design Procedure/Optimization**

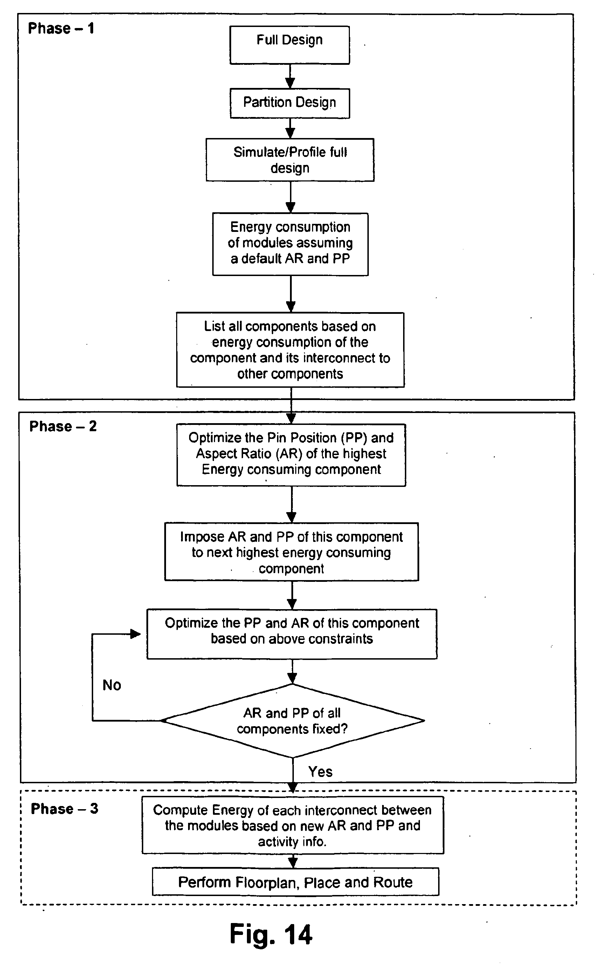

A flow or technique to optimize aspect ratio and pin placement of different modules in a design is explained hereinafter, with reference to Fig. 14.

The Aspect Ratio (AR) and Pin Position (PP) optimization procedure in accordance with embodiments of the present invention can be split up into two phases: Phase -1 and Phase -2. The different steps involved in the two phases are described below and are also shown in the flow diagram. To complete the full Physical Design, Phase -3 can also be used (which performs floorplanning, placement and route between the different modules). Phase -3 is outside the scope of the present invention.

Phase - 1:

From the top level design, a hierarchical split between the different components of the processor (for e.g. Register File, Datapath clusters, Instruction Buffers/Loop Buffers, Data memory, DMA datapath, Instruction Memory) can be made. This split is design dependent and can be made manually or automated.

The different "partitioned" components are from here on referred to as modules. Once partitioned, the aspect ratio (AR) of the modules and the pin placement of the different pins of each module need to be decided after which a floor plan and place and route can be done.

The activity of the different modules and their connectivity to the other modules can be obtained via (RTL) simulation of the design under realistic conditions. Once the activity of the different modules and the activity of the connectivity between the different modules are known (usually captured with the SAIF format either at Gate or RTL level) an estimate of the energy consumption of the module can be taken, as changing the Aspect Ratio and pin position impacts the energy consumption of both the module itself and the interconnect. It is to be noted that the energy estimation can be obtained from a gate level simulation of the complete processor (with all its modules), while running a realistic testbench.

Once a list of the different modules and their activity is known, a high level estimation of the energy consumption can be made and the list can be ordered e.g. based on a descending order of energy consumption. The estimate of the energy consumption of the component can be done with a default Aspect Ratio (AR) and a default pin placement (PP), which could be decided by a tool like Synopsys Physical Compiler (after logic and physical synthesis). An example of a descending list of energy consuming modules could be for example: Data Memory, Instruction Memory, Data Register File, Datapath, DMA, and Loop Buffer.

Phase - 2:

Once a list of different modules and their energy consumption and the energy consumption of nets connecting the module is made, the aspect ratio and the pin placement of one of the highest energy consuming modules are first decided and then the constraints are passed on to a next module. For example, since the data memory is one of the highest energy consuming modules (based on activity and interconnect capacitance estimation), the pin positions and the optimal aspect ratio of this module may be decided first. The constraints found are then passed on to the register file. Next, based on the constraints of the data memory, the pin placement of the register file and its aspect ratio can be decided.

For example in case of the processor ofEP-A-1 701 249, this would imply that the pitch of the sense amplifier of the data memory would impose a constraint on the pin position of the next block (VWR). Therefore the pitch of the sense amplifier would be the pitch of the flip-flops of the VWR. The aspect ratio of the block can then be adapted such that the energy consumption of the net between these two modules is minimized (Data memory and VWR). Next the pin positions of the register file/VWR would decide or determine the pin position of the datapath.

In a normal processor this would mean that the input ports of the register file which is used for Load/Store (between the register file and the data memory) would be located next to the memory's pins. Such an optimization would reduce the energy consumption of the net which connects the data memory to the register file.

While deciding on the AR and PP of a module under consideration, a relative placement of the modules which impose a constraint on this module under consideration has to be estimated such that the decisions of the AR and PP of the current module can be taken. During physical synthesis of the individual module, the pin position has to be kept flexible such that the AR and PP can be optimized.

It should be noted that after the change in AR and PP of each module, layout and placement of standard cells inside the module (physical synthesis) has to be redone and also the Place and Route of the standard cells inside the module has to be done. This can be done using a regular physical synthesis tool like Physical Compiler.

The next module in the ordered list of energy hungry modules could be the datapath. In such a case, this implies that the pin position of the datapath is imposed by the aspect ratio and pin position of the register file. Once the pin position of the datapath is decided upon, the aspect ratio of the datapath can be optimized such that the energy consumption of the nets between the register file/VWR and the datapath is minimized. Similarly, the aspect ratio and pin position of all the clusters of the datapath is to be decided. It is to be noted that the different data clusters of the processor could include the DMA, MMU and other units which also perform the data transfer. If these datapath elements (like DMA, LD/ST) are also connected to other units like the data memory, then constraints of the pin position and aspect ratio of the memory would be taken as constraints for these datapath elements as well.

The next unit where the aspect ratio and the pin position needs to be decided may be the instruction memory. The instruction memory can comprise different hierarchies e.g. loop buffers, L1 Instruction Memory etc. Once again, based on high level estimates, the highest energy consuming unit for e.g. the Loop Buffer has to be considered and then the higher levels of the memory.

Phase - 3:

Once the AR and PP of each of the different modules are obtained, the activity information of the interconnection between the different modules can be used for performing an optimized floorplanning, placement and routing. In this phase, the activity/energy consumption of the interconnection between the different modules has to be taken as input to drive the place and route.

Five designs of the processor as described inEP-A-1 701 249 have been made. The first design (Flat design) consisted of completely synthesizing the processor in a flat way by Synopsys Physical Compiler using TSMC 130nm, 1.2V design technology. The processor comprised 3 VWRs and a datapath with loop buffers for the instruction storage. The width of the VWR was taken to be 768 bits. The size of the datapath (word size) was taken to be 96 bits. Therefore 8 words can be simultaneously stored in one VWR. The width of the wide bus, between the memory and the VWR was also taken to be 768 bits. The width of one wide memory line was also taken to be 768 bits.

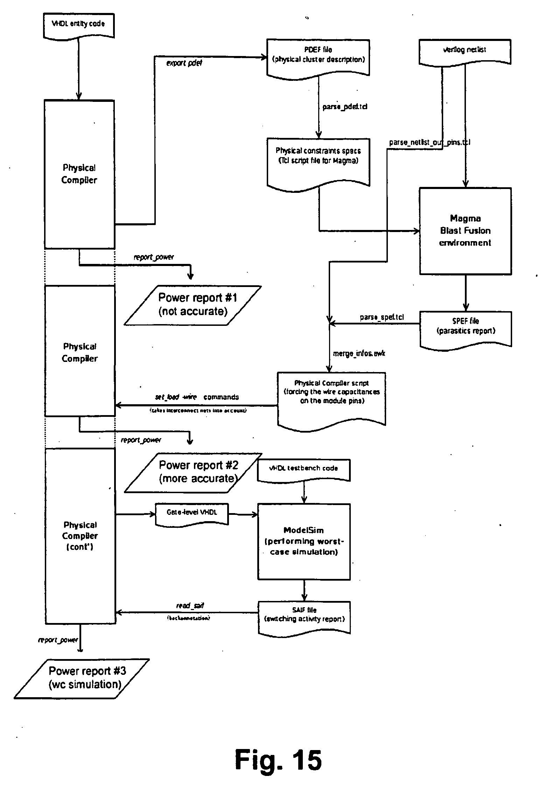

Once the design of the processor core was completed in Physical Compiler, the design was then exported to the Magma Fusion Blast environment using the PDEF file-exchange format. A custom placement and route algorithm was used to route between the memory unit and the core. The complete flow of the technique used for power estimation is shown in Figure 15. Figure 15 also shows the different tools and the files used to interchange formats used across the different tools.

Figure 16 shows the layout after place and route for the Flat Design. It can be seen directly from Figure 16 that the routing the two components (Core and the memory) is very large and hence the flat design would result in very high energy consumption.

In a first optimization the different parts of the processor (very wide registers, datapath, loop buffers) were separately synthesized in Physical Compiler and then placed and routed in Magma Fusion Blast. The default shape (aspect ratio) and default pin placement was taken from Physical Compiler and routed in Magma. The design is henceforth referred to as "Default Shape and Default Pin" (DS_DP). The DS_DP design is shown in Figure 17.

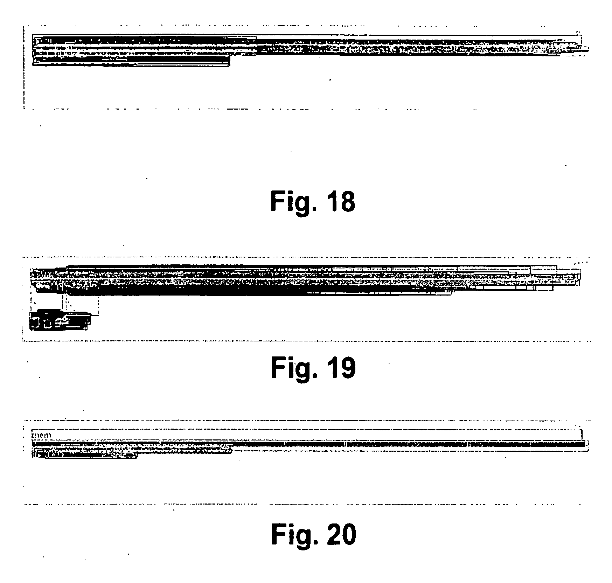

To optimize the design further, the different parts of the processor were shaped so that they could align perfectly with the other parts. The pins were still placed using the default options. This design is referred to as "Shaped and Default Pin Placement" (S_DP). This is shown in Figure 18. It can once again be noted that the interconnect is a dominant part of the design. Such a S_DP design reduces the horizontal interconnect requirement but the vertical congestion remains.

Another optimization was performed by using the pin placement appropriately and using the default shape (aspect ratio): "Pin Placement and Default Shape" (DS_PP). Although the vertical length of the interconnect is reduced, as the all the wires need to converge in a small location (due to square aspect ratio). Hence the horizontal interconnect/congestion is very large .Figure 19 shows the DS_PP design.

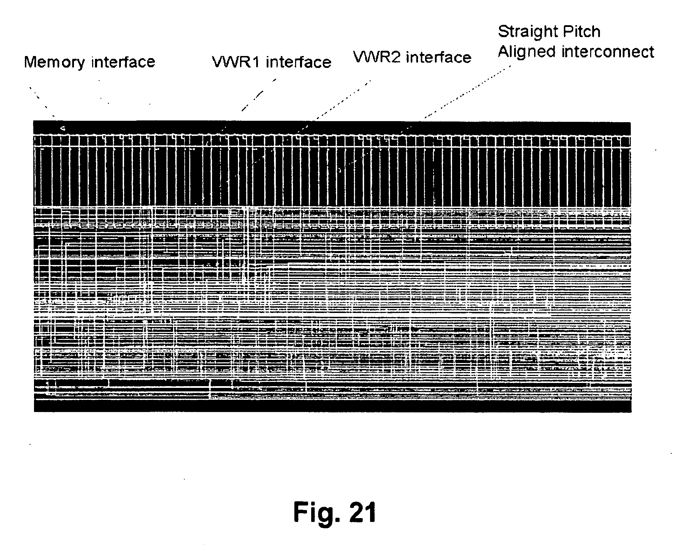

For the most optimal design, each module/component of the processor was shaped and pin placement was performed: "Shaped and Pin Placement" (S_PP). This design is shown in Figure 20. As this helps both the vertical as well as horizontal interconnect congestion, the net interconnect lengths is reduced drastically. As a further optimization it was ensured that the pitch of the sense amplifiers (of the software controlled wide memory), were aligned to that of the pitch of the flip flops of the VWRs. Therefore reducing the interconnect between the two units dramatically. A zoomed in view of the memory connectivity to the VVWR is shown in Figure 21. It can be seen that the interconnect between the memory and the VWR is properly aligned (no turns or congestion) and therefore is energy optimized.

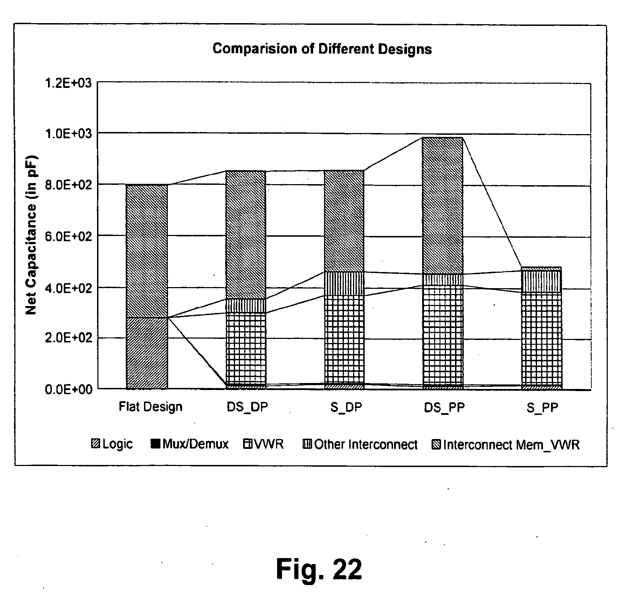

Figure 22 shows the total capacitance of the different parts of the system (including both gate capacitances as well as interconnect capacitance):

$$\text{Net capacitance} = \Sigma \text{ (Capacitance of all nets in design)}$$

$$\text{Design Capacitance} = \Sigma \text{ (} C_{gs} + C_{gd} + C_{gb} \text{) of all gates}$$
$$+ \Sigma \text{ (Cap of all wires)}$$

It can be seen from Figure 22 that the design capacitance has reduced dramatically and hence the energy consumption has reduced drastically as well.

**Claims**

1. A signal processing device adapted for simultaneous processing of at least two loops, each loop having loop instructions, the signal processing device comprising
   a plurality of functional units capable of executing word- or subword- level operations on data, and grouped into at least a first and a second processing units, the first and second processing units being connected to a first and second instruction memory, respectively, for receiving loop instructions of one of the loops and to a first and a second memory controller, respectively, for fetching loop instructions from the corresponding instruction memory, **characterised in that** said first and second memory controllers are adapted for selecting operation synchronised or unsynchronised with respect to each other, said selection being performed via said loop instructions.

2. A signal processing device in accordance with claim 1, wherein said memory controllers each at least include a slave loop counter.

3. A signal processing device in accordance with claim 2, wherein the signal processing device has a master counter for providing a timing signal and said slave loop counters are connected to the master counter for receiving the timing signal.

4. A signal processing device according to claim 3, the timing signal comprising a sequence of time points, wherein the selection is performed via said loop instructions at every time point.

5. A method for converting application code into execution code suitable for execution on an architecture as defined in any of claims 1 to 4, the method comprising

- obtaining application code, the application code comprising at least a first and a second loops, each of said loops including loop instructions,
- converting at least part of said application code for at the least first and second loops, said converting including insertion of selection information into each of the loop instructions, the selection information being for fetching a next loop instruction of a first loop, synchronised or unsynchronised with the fetching of a next loop instruction of a second loop.

6. A method according to claim 5, wherein said converting is adapted so that, when executing said at least two loops simultaneously, each loop executing on one of the processing units, selecting of the fetching of next loop instructions is performed at time points of a time signal.

7. A method according to claim 6, wherein said converting furthermore comprises providing the time signal having time points.

8. A method according to any of claims 5 to 7, wherein the converting of at least part of the application code is based on time/data dependency analysis.

9. A method according to any of claims 5 to 8, wherein at least part of the data communication between said loops is performed solely via a shared data memory to which at least two functional units are connected.

10. The method according to any of claims 5 to 9, wherein said converting includes inserting synchronisation/alignment points between said at least two loops.

11. The method according to any of claims 5 to 10, wherein said application code is pre-processed to fit into a polyhedral representation before said step of converting.

12. The method according to any of claims 5 to 11, wherein said application code is pre-processed such that for at least two loops their instructions fit within one of said instruction memories.

13. Method for executing an application on a signal processing device as defined in any of claims 1 to 4, the method comprising executing the application on the signal processing device as a single process thread under control of a primary memory controller, and dynamically switching the signal processing device into a device with at least two non-overlapping processing units, and splitting a portion of the application in at least two process threads, each process thread being executed simultaneously as a separate process thread on one of the processing units, each processing unit being controlled by a separate memory controller, said memory controllers selecting operation synchronised or unsynchronised with respect to each other, said selection being performed via loop instructions of said threads.

14. Method according to claim 13, wherein the at least two process threads are loops.

15. Method according to any of claims 13 or 14, the method comprising, for at least part of the application, adapting the process thread execution in accordance with synchronisation points between said at least two process threads.

**Patentansprüche**

1. Signalverarbeitungsvorrichtung, die zur gleichzeitigen Verarbeitung von mindestens zwei Schleifen ausgebildet ist, wobei jede Schleife Schleifenanweisungen aufweist, wobei die Signalverarbeitungsvorrichtung umfasst:

eine Vielzahl funktioneller Einheiten, die zur Ausführung von Operationen auf Wort- oder Sub-Wortebene an Daten imstande sind, und in mindestens eine erste und eine zweite Verarbeitungseinheit gruppiert sind, wobei die erste und zweite Verarbeitungseinheit an einen ersten beziehungsweise zweiten Anweisungsspeicher angeschlossen ist, um Schleifenanweisungen für eine der Schleifen zu empfangen, und an eine erste beziehungsweise zweite Speichersteuerung, um Schleifenanweisungen von dem entsprechenden Anweisungsspeicher abzurufen, **dadurch gekennzeichnet, dass** die erste und zweite Speichersteuerung für eine Auswahl einer Operation, synchronisiert oder nicht synchronisiert in Bezug zueinander, ausgebildet sind, wobei die Auswahl über die Schleifenanweisungen erfolgt.

**2.** Signalverarbeitungsvorrichtung nach Anspruch 1, wobei die Speichersteuerungen jeweils mindestens einen Slave-Schleifenzähler enthalten.

**3.** Signalverarbeitungsvorrichtung nach Anspruch 2, wobei die Signalverarbeitungsvorrichtung einen Master-Zähler hat, um ein Zeitsteuerungssignal bereitzustellen, und die Slave-Schleifenzähler an den Master-Zähler zum Empfangen des Zeitsteuerungssignals angeschlossen sind.

**4.** Signalverarbeitungsvorrichtung nach Anspruch 3, wobei das Zeitsteuerungssignal eine Sequenz von Zeitpunkten umfasst, wobei die Auswahl zu jedem Zeitpunkt über die Schleifenanweisungen ausgeführt wird.

**5.** Verfahren zum Umwandeln eines Anwendungskodes in einen Ausführungskode, der zum Ausführen an einer Architektur wie in einem der Ansprüche 1 bis 4 definiert, geeignet ist, wobei das Verfahren umfasst:

- Erhalten eines Anwendungskodes, wobei der Anwendungskode mindestens eine erste und eine zweite Schleife umfasst, wobei jede Schleife Schleifenanweisungen enthält,
- Umwandeln mindestens eines Teils des Anwendungskodes für die mindestens erste und zweite Schleife, wobei die Umwandlung das Einfügen von Auswahlinformationen in jede der Schleifenanweisungen enthält, wobei die Auswahlinformationen zum Abrufen einer nächsten Schleifenanweisung einer ersten Schleife, synchronisiert oder nicht synchronisiert mit dem Abrufen einer nächsten Schleifenanweisung einer zweiten Schleife, dienen.

**6.** Verfahren nach Anspruch 5, wobei das Umwandeln so ausgebildet ist, dass, wenn die mindestens zwei Schleifen gleichzeitig ausgeführt werden, jede Schleife auf einer der Verarbeitungseinheiten, die Auswahl des Abrufens der nächsten Schleifenanweisungen zu Zeitpunkten eines Zeitsignals durchgeführt wird.

**7.** Verfahren nach Anspruch 6, wobei die Umwandlung des Weiteren das Bereitstellen des Zeitsignals mit Zeitpunkten umfasst.

**8.** Verfahren nach einem der Ansprüche 5 bis 7, wobei das Umwandeln mindestens eines Teils des Anwendungskodes auf einer Zeit/Daten-Abhängigkeitsanalyse beruht.

**9.** Verfahren nach einem der Ansprüche 5 bis 8, wobei mindestens ein Teil der Datenkommunikation zwischen den Schleifen nur über einen gemeinsamen Datenspeicher ausgeführt wird, an den mindestens zwei funktionelle Einheiten angeschlossen sind.

**10.** Verfahren nach einem der Ansprüche 5 bis 9, wobei die Umwandlung das Einsetzen von Synchronisations-/Ausrichtungspunkten zwischen den mindestens zwei Schleifen umfasst.

**11.** Verfahren nach einem der Ansprüche 5 bis 10, wobei der Anwendungskode vor dem Umwandlungsschritt vorverarbeitet wird, um in eine polyhedrale Darstellung zu passen.

**12.** Verfahren nach einem der Ansprüche 5 bis 11, wobei der Anwendungskode so vorverarbeitet wird, dass für mindestens zwei Schleifen deren Anweisungen in einen der Anweisungsspeicher passen.

**13.** Verfahren zur Ausführung einer Anwendung an einer Signalverarbeitungsvorrichtung, wie in einem der Ansprüche 1 bis 4 definiert, wobei das Verfahren umfasst:

Ausführen der Anwendung auf der Signalverarbeitungsvorrichtung als einzelnen Prozessfaden unter der Steuerung einer primären Speichersteuerung, und
dynamisches Umschalten der Signalverarbeitungsvorrichtung in eine Vorrichtung mit mindestens zwei nicht überlappenden Verarbeitungseinheiten, und Aufteilen eines Abschnitts der Anwendung in mindestens zwei Prozessfäden, wobei jeder Prozessfaden gleichzeitig als separater Prozessfaden auf einer der Verarbeitungseinheiten ausgeführt wird, wobei jede Verarbeitungseinheit durch eine separate Speichersteuerung gesteuert wird, wobei die Speichersteuerungen eine Auswahl in Bezug zueinander synchronisiert oder nicht synchronisiert wählen, wobei die Auswahl über Schleifenanweisungen der Fäden durchgeführt werden.

**14.** Verfahren nach Anspruch 13, wobei die mindestens zwei Prozessfäden Schleifen sind.

**15.** Verfahren nach einem der Ansprüche 13 oder 14, wobei das Verfahren für mindestens einen Teil der Anwendung das Anpassen der Prozessfadenausführung in Übereinstimmung mit Synchronisierungspunkten zwischen den mindestens zwei Prozessfäden umfasst.

**Revendications**

**1.** Dispositif de traitement de signal conçu pour un traitement simultané d'au moins deux boucles, chaque boucle ayant des instructions de boucle, le dispositif de traitement de signal comprenant :

une pluralité d'unités fonctionnelles susceptibles d'exécuter des opérations au niveau du mot ou du sous-mot sur des données, et groupées en au moins une première et une deuxième unité de traitement, les première et deuxième unités de traitement étant respectivement reliées à une première et à une deuxième mémoire d'instruction, pour recevoir des instructions de boucle d'une des boucles et respectivement à une première et à une deuxième unité de commande de mémoire, pour aller chercher des instructions de boucle à partir de la mémoire d'instruction correspondante, **caractérisé en ce que** lesdites première et deuxième unités de commande de mémoire sont conçues pour sélectionner un fonctionnement synchronisé ou non synchronisé l'une par rapport à l'autre, ladite sélection étant effectuée par l'intermédiaire desdites instructions de boucle.

**2.** Dispositif de traitement de signal selon la revendication 1, dans lequel lesdites unités de commande de mémoire incluent chacune au moins un compteur de boucle esclave.

**3.** Dispositif de traitement de signal selon la revendication 2, dans lequel le dispositif de traitement de signal a un compteur maître pour fournir un signal de cadencement et lesdits compteurs de boucle esclave sont reliés au compteur maître pour recevoir le signal de cadencement.

**4.** Dispositif de traitement de signal selon la revendication 3, le signal de cadencement comprenant une séquence de points temporels, dans lequel la sélection est effectuée par l'intermédiaire desdites instructions de boucle à chaque point temporel.

**5.** Procédé pour transformer un code d'application en code d'exécution approprié pour une exécution sur une architecture telle que définie dans l'une quelconque des revendications 1 à 4, le procédé comprenant :

- l'obtention d'un code d'application, le code d'application comprenant au moins une première et une deuxième boucle, chacune desdites boucles incluant des instructions de boucle,
- la transformation d'au moins une partie dudit code d'application pour les au moins première et deuxième boucles, ladite transformation incluant l'insertion d'informations de sélection dans chacune des instructions de boucle, les informations de sélection servant à aller chercher une instruction de boucle suivante d'une première boucle, synchronisée ou non synchronisée avec l'amenée d'une instruction de boucle suivante d'une seconde boucle.

**6.** Procédé selon la revendication 5, dans lequel ladite transformation est conçue de sorte que, en exécutant lesdites au moins deux boucles simultanément, chaque boucle s'exécutant sur une des unités de traitement, la sélection de l'amenée des instructions de boucle suivantes est effectuée à des points temporels d'un signal de temps.

**7.** Procédé selon la revendication 6, dans lequel ladite transformation comprend en outre la fourniture du signal de temps ayant des points temporels.

**8.** Procédé selon l'une quelconque des revendications 5 à 7, dans lequel la transformation d'au moins une partie du code d'application est basée sur une analyse de dépendance temps / données.

**9.** Procédé selon l'une quelconque des revendications 5 à 8, dans lequel au moins une partie de la communication de données entre lesdites boucles est effectuée seulement par l'intermédiaire d'une mémoire de données partagée à laquelle au moins deux unités fonctionnelles sont reliées.

**10.** Procédé selon l'une quelconque des revendications 5 à 9, dans lequel ladite transformation inclut l'insertion de points de synchronisation / alignement entre lesdites au moins deux boucles.

**11.** Procédé selon l'une quelconque des revendications 5 à 10, dans lequel ledit code d'application est prétraité pour s'ajuster dans une représentation polyédrique avant ladite étape de transformation.

**12.** Procédé selon l'une quelconque des revendications 5 à 11, dans lequel ledit code d'application est prétraité de sorte que pour au moins deux boucles, leurs instructions s'ajustent dans l'une desdites mémoires d'instruction.

**13.** Procédé pour exécuter une application sur un dispositif de traitement de signal tel que défini selon l'une quelconque des revendications 1 à 4, le procédé comprenant :

l'exécution de l'application sur le dispositif de traitement de signal en tant que fil de processus unique sous la commande d'une unité de commande de mémoire primaire, et
la commutation dynamique du dispositif de traitement de signal en un dispositif avec au moins deux unités de traitement sans chevauchement, et la division d'une partie de l'application en au moins deux fils de processus, chaque fil de processus étant exécuté simultanément en tant que fil de processus distinct sur une des unités de traitement, chaque unité de traitement étant commandée par une unité de commande de mémoire distincte, lesdites unités de commande de mémoire sélectionnant un fonctionnement synchronisé ou non synchronisé l'une par rapport à l'autre, ladite sélection étant effectuée par l'intermédiaire d'instructions de boucle desdits fils.

**14.** Procédé selon la revendication 13, dans lequel les au moins deux fils de processus sont des boucles.

**15.** Procédé selon l'une quelconque des revendications 13 ou 14, le procédé comprenant, pour au moins une partie de l'application, l'adaptation de l'exécution de fil de processus selon des points de synchronisation entre lesdits au moins deux fils de processus.

for i = 1...10          for i' = 1...5
  for j = 1...10           for j' = 1...5

Code for Processor          Code for SDRAM/
Operations                  Scratchpad
                            Management

Loop/Code – 1               Loop/Code – 2

## Fig. 1

```
ld c1, 0          (1)                ld c1, 0          (1)

XX: ld c2, 0      (0)                XX: ld c2, 0      (0)
YY: ld r2, r3     (0)                YY: muli r1, c1, 5 (0)
ld r4, r5+        (0)                add r1, r1, c2    (0)
mac r6, r2, r4    (0)                <load page> r1    (0)
addi c2, c2,1     (0)    j           addi c2, c2, 1    (0)   j'
cmpi c2, 10       (0)                cmpi c2, 5        (0)
bne YY            (0)                bne YY            (0)

ZZ: ld c3, 0      (0)                addi c1, c1, 1    (0)
ld r6, r7+        (0)                cmpi c1, 20       (0)
ld r8, r9+        (0)                nop               (1)
add r10, r8, r6   (0)    k           bne XX            (1)
addi c3, c3, 1    (0)
cmpi c3, 10       (0)
bne ZZ            (0)

addi c1, c1, 1    (0)
cmpi c1, 10       (0)
bne XX            (1)
```

Loop/Code – 1               Loop/Code – 2

## Fig. 7

(c) VLIW processor with Distributed Loop Controller

(b) VLIW processor with Single Loop Controller

(a) SMT Based VLIW Processor

# Fig. 2

START ADDR

END ADDR

$\geq$

$\leq$

LB_USE

LO Buffer
Loop Counter

SUB → NEW_PC

## Fig. 3

Values Stored in Register File

| Value Stop | Value Incr. | Value Curr. | Addr Start | Addr Stop | |
|---|---|---|---|---|---|
| 30 | 1 | 2 | 800021 | 800256 | Loop 1 |
| | | | | | Loop 2 |
| | | | | | ... |
| | | | | | Loop N |

Instruction Formats:
LDLB <field_id>, <reg_id>, value
LB <field_id>
<field_id>: Every field id for each loop
<reg_id>: Every reg_id for each diff
value for a loop

LC

LB_USE

> 1 → LC = Start Addr
0 → LC = LC + 1

+

> 1 → LC = Stop Addr
0 → LC = LC - 1

## Fig. 4

```
LDLB 1, 1, 20              // Load iterator stop value
LDLB 1, 2, 1               // Load iterator increment value
LDLB 1, 3, 0               // Load iterator current value
LDLB 1, 4, <start_addr_i>  // Load iterator start address
LDLB 1, 5, <stop_addr_i>   // Load iterator stop address


LDLB 2, 1, 10
LDLB 2, 2, 1
LDLB 2, 3, 0
LDLB 2, 4, <start_addr_j>
LDLB 2, 5, <stop_addr_j>
LBON
```

for (i=0; i< 20; i++) {

   <Code Block 1>

   for(j=0; j<10; j++) {
      <Code Block 2>

   }

   <Code Block 3>
}

```
┌─────────────────┐
│ ASM for Code    │
│ Block 1         │
└─────────────────┘

┌─────────────────┐
│ ASM for Code    │
│ Block 2         │
└─────────────────┘
LB 2                       // Perform loop for j

┌─────────────────┐
│ ASM for Code    │
│ Block 3         │
└─────────────────┘
LB 1                       // Perform loop for i
```

(a)                       (b)

## Fig. 5

IR_USE = 1

all LB_USEi not '0'

Single-threaded
LB Operation

Execution multi-threaded
LB Operation

IR_USE = 0

IR_USE = 0

LBON

all LB_USEi = 0

All LB loaded

Normal
Execution

LDLO

Initialize multi-threaded
LB Operation

## Fig. 6

Compiler-Simulator Framework

```
┌──────────────────────────────────────────────────────────────────────────────┐     ┌──────────────────────┐
│  ┌─────────────────┐                                                           │     │                      │
│  │  Architecture   │                                                           │     │  Energy Consumption  │
│  │   Description   │────────────┐                                              │     │  for the simulation  │
│  └─────────────────┘            │                                              │     │                      │
│                                 ▼                                              │     └──────────────────────┘
│  ┌─────────────────┐      ┌──────────────┐      ┌──────────────┐   ┌──────────────┐
│  │   Input Code    │─────▶│    CRISP     │─────▶│  Simulator   │──▶│  Simulation  │
│  │                 │      │   Compiler   │      │              │   │    Trace     │
│  └─────────────────┘      └──────────────┘      └──────────────┘   └──────────────┘
└──────────────────────────────────────────────────────────────────────────────┘
```

```
┌──────────────────────────────────────────────────────────────────────────────────────┐
│  ┌─────────────────┐      ┌──────────────┐      ┌──────────────┐                        │
│  │   Component     │─────▶│Synopsys Physical│──▶│  Layout for  │                        │
│  │VHDL Description │      │   Compiler   │      │each component│                        │
│  └─────────────────┘      └──────────────┘      └──────────────┘                        │
│                                 ▲                                                        │
│  ┌─────────────────┐            │                      │       ┌──────────────┐  ┌──────────────┐
│  │   TSMC 90nm     │────────────┘                      │       │Synopsys Physical│  │Energy/Activation│
│  │   Libraries     │                                   │       │   Compiler   │──▶│ per component │
│  └─────────────────┘                                   │       └──────────────┘  └──────────────┘
│                                                        ▼              ▲
│  ┌─────────────────┐                          ┌──────────────┐  ┌──────────────┐
│  │    Artisan      │─────────────────────────▶│Magma Fusion  │─▶│Backannotated │
│  │ Memory Generator│                          │Blast Environment│ │ Layout with  │
│  └─────────────────┘                          │(Place and Route)│ │routing capacitance│
│                                               └──────────────┘  └──────────────┘
└──────────────────────────────────────────────────────────────────────────────────────┘
```

Hardware Synthesis Framework

# Fig. 8

Fig. 9

**Fig. 10**

Fig. 11

EP 1 958 059 B1

Fig. 12

**Phase – 1**

Full Design

↓

Partition Design

↓

Simulate/Profile full design

↓

Energy consumption of modules assuming a default AR and PP

↓

List all components based on energy consumption of the component and its interconnect to other components

**Phase – 2**

Optimize the Pin Position (PP) and Aspect Ratio (AR) of the highest Energy consuming component

↓

Impose AR and PP of this component to next highest energy consuming component

↓

Optimize the PP and AR of this component based on above constraints

↓

AR and PP of all components fixed?

No

Yes

**Phase – 3**

Compute Energy of each interconnect between the modules based on new AR and PP and activity info.

↓

Perform Floorplan, Place and Route

# Fig. 14

Fig. 15

*SP Width = Bus Width = FG Width*

**Fig. 13**

**Fig. 16**

**Fig. 17**

**Fig. 18**

**Fig. 19**

**Fig. 20**

Memory interface      VWR1 interface    VWR2 interface    Straight Pitch
Aligned interconnect

**Fig. 21**

**Comparision of Different Designs**

Fig. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 05447054 A

- EP 1701249 A

**Non-patent literature cited in the description**

- **Andy Lambrechts ; Praveen Raghavan ; Anthony Leroy ; Guillermo Talavera ; Tom Van der Aa ; Murali Jayapala ; Francky Catthoor ; Diederik Verkest ; Geert Deconinck ; Henk Coporaal.** Power breakdown analysis for a heterogeneous NoC platform running a video application. *Proc of IEEE 16th International Conference on Application-specific Systems, Architectures and Processors,* July 2005, 179-184

- **Rajeshwari Banakar ; Stefan Steinke ; Bo-Sik Lee ; M. Balakrishnan ; Peter Marwedel.** Scratchpad memory: A design alternative for cache on-chip memory in embedded systems. *Proc of CODES,* May 2002

- **M. Kandemir ; I. Kadayif ; A. Choudhary ; J. Ramanujam ; I. Kolcu.** Compilerdirected scratch pad memory optimization for embedded multiprocessors. *IEEE Trans on VLSI,* March 2004, 281-287

- **Scott Rixner ; William J. Dally ; Brucek Khailany ; Peter R. Mattson ; Ujval J. Kapasi ; John D. Owens.** Register organization for media processing. *HPCA,* January 2000, 375-386

- **Viktor Lapinskii ; Margarida F. Jacome ; Gustavo de Veciana.** Application-specific clustered VLIW datapaths: Early exploration on a parameterized design space. *IEEE Transactions on Computer Aided Design of Integrated Circuits and Systems,* August 2002, vol. 21 (8), 889-903

- **M. Jaypala ; T. Vanderaa.** Clustered Loop Buffer Organization for Low Energy VLIW Embedded Processors. *IEEE Transactions on VLSI,* June 2004

- **Halambi, A. Shrivastava.** An efficient compiler technique for code size reduction using reduced bit-width ISAs. *Proc of DAC,* March 2002

- **M. Conte ; S. Barierjia.** Instruction fetch mechanisms for VLIW architectures with compressed encodings. *Proc of 29th International Symposium on Microarchitecture (MICRO),* December 1996

- **H. DeMan.** Ambient intelligence: Giga-scale dreams and nano-scale realities. *Proc of ISSCC, Keynote Speech,* February 2005

- **S. Cotterell ; F. Vahid.** Synthesis of customized loop caches for core-based embedded systems. *Proc of International Conference on Computer Aided Design (ICCAD),* November 2002

- **J. W. Sias ; H. C. Hunter.** Enhancing loop buffering of media and telecommunications applications using low-overhead predication. *Proc of MICRO,* December 2001

- **S. Steinke ; L. Wehmeyer.** Assigning program and data objects to scratchpad for energy reduction. *Proc of Design Automation and Test in Europe,* March 2002

- **Murali Jayapala ; Francisco Barat ; Tom Vander Aa ; Francky Catthoor ; Henk Corporaal ; Geert Deconinck.** Clustered loop buffer organization for low energy VLIW embedded processors. *IEEE Transactions on Computers,* June 2005, vol. 54 (6), 672-683

- **J. I. Gómez ; P. Marchal.** Optimizing the memory bandwidth with loop morphing. *ASAP,* 2004, 213-223

- **E.Ozer ; T. Conte.** Weld: A multithreading technique towards latency-tolerant VLIW processors. *International Conference on High Performance Computing,* 2001

- **S. Kaxiras ; G. Narlikar.** Comparing power consumption of an SMT and a CMP DSP for mobile phone workloads. *Proc of CASES,* November 2001, 211-220

- **D. M. Tullsen ; S. J. Eggers.** Simultaneous multithreading: Maximizing on-chip parallelism. *Proc of ISCA,* June 1995, 392-403

- **VANDER AN T et al.** Instruction buffering exploration for low energy VLIWs with instruction clusters. *DESIGN AUTOMATION CONFERENCE, 2004. PROCEEDINGS OF THE ASP-DAC 2004,* 27 January 2004, ISBN 0-7803-8175-0, 825-830

- **W. Dally.** Low power architectures. *IEEE International Solid State Circuits Conference, Panel Talk on "When Processors Hit the Power Wall",* February 2005

- **A. El-Moursy ; R. Garg ; D. Albonesi ; S. Dwarka-das.** Partitioning multi-threaded processors with a large number of threads. *International Symposium on Performance Analysis of Systems and Software,* March 2005
- **M. Jaypala ; T. Vanderaa.** clustered Loop Buffer Organization for Low Energy VLIW Embedded Processors. *IEEE Transactions on VLSI,* June 2004
- **F. Quillere ; S. Rajopadhye ; D. Wilde.** Generation of efficient nested loops from polyhedra. *Intl. Journal on Parallel Programming,* 2000
- **Martin Palkovic ; Erik Brockmeyer ; Peter Vanbroekhoven ; Henk Corporaal ; Francky Catthoor.** Systematic pre-processing of data dependent constructs for embedded systems. *Proceedings of PATMOS,* 2005, 89-98
- **P. OpDeBeeck ; F. Barat.** CRISP: A template for reconfigurable instruction set processors. *Proc of International conference on Field Programmable Logic,* August 2001
- **Andy Lambrechts ; Praveen Raghavan ; Anthony Leroy ; Guillermo Talavera ; Tom Van der Aa ; Murali Jayapala ; Francky Catthoor ; Diederik Verkest ; Geert Deconinck ; Henk Coporaal.** Power breakdown analysis for a heterogeneous NoC platform running a video application. *Proc of IEEE 16th International Conference on Application-specific Systems, Architectures and Processors (ASAP),* July 2005, 179-184
- **José Ignacio Gómez ; Paul Marchal ; Sven Verdoorlaege ; Luis Piñuel ; Francky Catthoor.** Optimizing the memory bandwidth with loop morphing. *ASAP,* 2004, 213-223
- **E. Ozer ; T.M. Conte ; S. Sharma.** Weld: A multi-threading technique towards latency-tolerant VLIW processors. *International Conference on High Performance Computing,* 2001